# EUROPEAN PATENT SPECIFICATION

(11) **EP 4 249 803 B1**
(45) Date of publication and mention of the grant of the patent: **27.08.2025**
(21) Application number: 22164242.4
(22) Date of filing: 24.03.2022
(51) Int. Cl.: F23G 7/06

(54) **REGENERATIVE THERMAL OXIDIZER, SYSTEM COMPRISING A REGENERATIVE THERMAL OXIDIZER AND METHOD OF OPERATING A REGENERATIVE THERMAL OXIDIZER**
REGENERATIVES THERMISCHES OXIDATIONSMITTEL, SYSTEM MIT EINEM REGENERATIVEN THERMISCHEN OXIDATIONSMITTEL UND VERFAHREN ZUM BETRIEB EINES REGENERATIVEN THERMISCHEN OXIDATIONSMITTELS
OXYDATION THERMIQUE RÉGÉNÉRATIVE, SYSTÈME COMPRENANT UNE OXYDATION THERMIQUE RÉGÉNÉRATIVE ET PROCÉDÉ DE FONCTIONNEMENT D'UNE OXYDATION THERMIQUE RÉGÉNÉRATIVE

(43) Date of publication of application: 27.09.2023
(73) Proprietor: Koch Engineered Solutions GmbH, 40723 Hilden (DE)
(72) Inventor: KLAUS, Wolfgang, 47803 Krefeld (DE); LORRA, Michael, 47803 Krefeld (DE); SCHWARTING, Gernot, 47803 Krefeld (DE)
(74) Representative: Ter Meer Steinmeister & Partner

(56) References cited:
- WO-A1-2011/036940
- JP-A- 2009 299 947
- US-A- 5 297 954

## Description

### FIELD OF THE INVENTION

The present invention relates to a regenerative thermal oxidizer, a system comprising a regenerative thermal oxidizer and a method of operating a regenerative thermal oxidizer.

### BACKGROUND OF THE INVENTION

Several types of regenerative thermal oxidizers (RTOs) are known in the art. RTOs are typically used for oxidation (combustion) of volatile organic compounds (VOCs) in waste gas streams. RTOs often include two separated beds that are in fluid communication with a common reaction room. Waste gas is introduced into the RTO to flow through one of the beds to preheat the waste gas. In the reaction room, VOCs are oxidized and the produced flue gas flows through the other one of the beds and transfers thermal energy to the bed. After a certain time period, the gas flow is switched such that waste is introduced into the RTO to flow through the bed that was previously heated by the flue gas and flue gas produced in the reaction room is directed through the bed that was previously used to preheat the waste gas. Due to the design of RTOs, a substantial amount of (thermal) energy can be recovered.

For a typical RTO, the entire waste gas stream to be oxidized will be mixed and diluted with air prior to entering the RTO. The waste gas often contains burnable compounds, such as VOCs, hydrocarbons (e.g., methane), hydrogen sulfide and carbon monoxide. In some countries, a minimum dilution of the waste gas is to maintain less than 25 % of the lower explosion limit of the mixture (waste gas and air). For example, this is required by BS-EN 12753. The required amount of air for the dilution of the waste gas is substantial. In some countries, the dilution is set by regulation, in other countries the decision is made in accordance with good engineering practice.

As a result, known RTOs are physically large, expensive to operate and require complex measurement equipment for measuring or determining the lower explosion limit.
US 5 297 954 A relates to a volatile organic compound (VOC) abatement system employing a bypass valve for introducing a portion of the VOCs directly into a combustion chamber without regenerative preheating. The resulting lowering of thermal efficiency of the regenerative thermal oxidizer allows the exhaust from the regenerative thermal oxidizer to carry more thermal energy. The thermal energy from the exhaust is then transferred to a heat exchanger to heat gasses flowing into the adsorption device.
WO 2011/036940 A1 relates to a regenerative thermal oxidization system provided with a differential pressure transmitter whereby a duct open to the atmosphere, which is installed in an intake duct that connects the blower of the regenerative thermal oxidizer (RTO) and the exhaust blower of production equipment that generates exhaust gas, is connected to the control damper or the air blower operation inverter of the RTO, said damper or inverter being disposed between the differential pressure transmitter and the blower of the RTO.
JP 2009 299947 A relates to a thermal storage type gas treatment furnace in which a raw gas is supplied to the combustion chamber from an introduction flow channel through a thermal storage chamber, the combustion gas is exhausted from the combustion chamber through another thermal storage chamber, and the thermal storage chamber to which the raw gas is supplied and the thermal storage chamber to which the combustion gas flows out are switched, further provided with a bypass flow channel for directly supplying a part of the raw gas from the introduction flow channel to the combustion chamber, and a flow rate of the raw gas supplied to the combustion chamber through the bypass flow channel is feedback controlled so that a temperature of the combustion chamber is kept at a prescribed set temperature, while keeping the sum of the flow rate of the raw gas supplied to the combustion chamber through the bypass flow channel and the flow rate of the raw gas supplied to the combustion chamber through the thermal storage chamber, to be constant.

It is an object of the present invention to provide an RTO that is physically small. Another object of the present invention is to provide an RTO that is inexpensive to manufacture. Yet another object of the present invention is to provide an RTO that is inexpensive to operate. Yet another object of the present invention is to provide an RTO which reduces energy consumption. Yet another object of the present invention is to provide an RTO that reduces carbon dioxide and/or nitrogen oxide emission.

### SUMMARY OF THE INVENTION

One or more of the above objects are solved by the combination of features of the independent claims. Advantageous embodiments are provided in the respective dependent claims. Features of an independent claim may be combined with features of one or more claims dependent on the independent claim, and features of one or more dependent claims can be combined with each other.

According to an aspect of the present invention, a regenerative thermal oxidizer is presented as defined in claim 1.

According to an aspect of the present invention, a system is presented as defined in claim 4.

The system includes any herein disclosed regenerative thermal oxidizer.

According to an aspect of the present invention, a method of operating a regenerative thermal oxidizer is presented as defined in claim 12.

Any herein disclosed regenerative thermal oxidizer may be operated by the method. Any herein disclosed system may be operated by the method.

According to the present invention, at least a portion of waste gas including a compound to be oxidized, for example a pollutant, may be directed towards the reaction chamber of the regenerative thermal oxidizer without dilution of the waste gas with air prior to entering the regenerative thermal oxidizer. For example, all of the waste gas or the entire waste gas may be introduced into the regenerative thermal oxidizer without dilution. The waste gas may not flow through a bed of the regenerative thermal oxidizer to be preheated. Also, a portion of the waste gas may be introduced into the regenerative thermal oxidizer without dilution (undiluted) and another portion of the waste gas may introduced into the regenerative thermal oxidizer diluted, for example diluted by air. The diluted portion of the waste gas may flow through a bed to be preheated and the undiluted portion of the waste gas may not flow through a bed to be preheated. Oxygen required for the oxidation of the compound to be oxidized may be separately introduced into the regenerative thermal oxidizer. For example, the required oxygen may be directed to the regenerative thermal oxidizer together with the diluted portion of the waste gas or (fully) separately from the waste gas. By separately introducing at least a portion of waste gas and oxygen into the regenerative thermal oxidizer, a significantly smaller gas volume flows through the beds of the regenerative thermal oxidizer and, hence, an efficiency of preheating of the waste gas is increased.

A regenerative thermal oxidizer may comprise a bed which is preheated from a previous oxidation cycle to preheat the input gases, e.g., waste gas. Thereby, (thermal) energy can be regenerated. Compounds of the input gases may be oxidized at an elevated temperature, for example at least 500 °C.

The regenerative thermal oxidizer includes a first transfer chamber and a second transfer chamber. Each of the transfer chambers may be a half-chamber, i.e., at least one side of the chamber may be open. The first and second transfer chambers may be (partially) separated by a wall. The wall may extend in the regenerative thermal oxidizer, preferably towards the reaction chamber.

The first transfer chamber comprises a first bed. The second transfer chamber comprises a second bed. Each of the herein disclosed beds may comprise a packing. For example, the packing may be a structured packing or a random packing. Each of the herein disclosed beds may comprise a ceramic material. The oxygen-containing gas and/or a portion of the waste gas may flow through the bed to exchange (thermal) energy with the bed. For example, when the temperature of the oxygen-containing gas and/or the portion of the waste gas is lower than the temperature of a bed, the oxygen-containing gas and/or the portion of the waste gas is heated or preheated when it flows through the bed.

The first transfer chamber is in fluid communication with the reaction chamber of the regenerative thermal oxidizer. The second transfer chamber is in fluid communication with the reaction chamber of the regenerative thermal oxidizer. The reaction chamber may be a reaction room. For example, the transfer chambers may be (physically) separated from each other. One side of each of the transfer chambers may be open towards the reaction chamber. Preferably, the first transfer chamber, the second transfer chamber and the reaction chamber may be designed such that a fluid (e.g., a gas or a liquid) may flow from the first transfer chamber to the reaction chamber. From the reaction chamber, the fluid may flow to the second transfer chamber. Preferably, inside the regenerative thermal oxidizer a fluid is not able to flow from the first transfer chamber to the second transfer chamber without passing through the reaction chamber.

A transfer chamber may be designed such that a fluid (e.g., a gas or a liquid) is guided from outside of the regenerative thermal oxidizer through the bed of the transfer chamber to the reaction chamber and/or a transfer chamber may be designed such that a fluid (e.g., a gas or a liquid) is guided from the reaction chamber through the bed of the transfer chamber to outside of the regenerative thermal oxidizer.

The oxidizable compound of the waste gas may be oxidized in the reaction chamber. The oxidation of the oxidizable compound may occur by a chemical reaction of the oxidizable compound and oxygen of the oxygen-containing gas.

A temperature in the reaction chamber may be at least 500 °C, preferably at least 600 °C, more preferably at least 700 °C, more preferably at least 800 °C. Alternatively or additionally, the temperature in the reaction chamber may be at most 1500 °C, preferably at most 1300 °C, more preferably at most 1100 °C. Specifically, the temperature in the reaction chamber may be between 800 °C and 1300 °C.

As mentioned above, the waste gas may comprise one or more oxidizable compound. Preferably, the waste gas comprises at least two different oxidizable compounds, more preferably at least three different oxidizable compounds, more preferably at least five different oxidizable compounds, more preferably at least ten different oxidizable compounds, more preferably at least twenty different oxidizable compounds. Different oxidizable compounds may be different by at least one chemical or physical characteristic. For example, different oxidizable compounds may have a different chemical composition and/or different oxidizable compounds may have a different boiling point.

Specific examples of an oxidizable compound include at least one hydrocarbon (e.g., methane), at least one volatile organic compound (VOCs), hydrogen sulfide (H₂S), hydrogen (H₂) and/or carbon monoxide (CO). Preferably, the waste gas includes at least one sulfur-containing compound or elementary sulfur. The sulfur-containing compound or elementary sulfur may be the oxidizable compound in the waste gas. Also, the at least one hydrocarbon may be the oxidizable compound in the waste gas.

The waste gas may be gas which was treated or pretreated in a previous gas treatment unit. For example, the waste gas may be tail gas of a sulfur recovery unit. The sulfur recovery unit may employ or comprise a Claus process. In general, the waste gas may be any gas that comprises an oxidizable compound, preferably the oxidizable compound is a pollutant. The waste gas may include vent gas and/or sweep gas from a sulfur pit. Also, vent gas and/or sweep gas from a sulfur pit may be introduced into the regenerative thermal oxidizer separately from the waste gas.

The waste gas source may be gas treatment unit, for example a sulfur recovery unit. The waste gas source may be an outlet or exit of the gas treatment unit.

Preferably, the oxygen-containing gas includes at least 5 vol.-% oxygen (O₂), more preferably at least 10 vol.-% oxygen, more preferably at least 15 vol.-% oxygen, more preferably at least 20 vol.-% oxygen, more preferably at least 25 vol.-% oxygen, more preferably at least 30 vol.-% oxygen, more preferably at least 35 vol.-% oxygen, more preferably at least 40 vol.-% oxygen, more preferably at least 50 vol.-% oxygen, more preferably at least 60 vol.-% oxygen, more preferably at least 70 vol.-% oxygen, more preferably at least 80 vol.-% oxygen, more preferably at least 90 vol.-% oxygen.

For example, the oxygen-containing gas may be air. The air may be air surrounding the regenerative thermal oxidizer and/or the system. The oxygen-containing gas source may be the surrounding or the environment of the regenerative thermal oxidizer and/or the system.

The regenerative thermal oxidizer comprises one or more first waste gas inlet for introducing at least a portion of waste gas into the regenerative thermal oxidizer. The one or more first waste gas inlet is positioned between at least a portion of the first bed and at least a portion of the reaction chamber. For example, the one or more first waste gas inlet may be a bore or a nozzle in a wall of the first transfer chamber. Alternatively, the one or more first waste gas inlet may be a bore or a nozzle in a wall of the reaction chamber.

The first waste gas inlet may be positioned or disposed such that the portion of the waste gas enters into the first transfer chamber and/or into the reaction chamber.

When oxygen-containing gas flows through the first bed of the first transfer chamber to the reaction chamber, the one or more first waste gas inlet may be positioned or disposed downstream (in the direction in which the fluid flows) of at least a portion of the first bed. In other words, the one or more first waste gas inlet may be positioned such that the portion of waste gas enters the regenerative thermal oxidizer downstream or after at least a portion of the first bed.

A distance between the one or more first waste gas inlet and the portion of the first bed may be less than 2.00 m, preferably less than 1.50 m, more preferably less than 1.00 m, more preferably less than 0.80 m, more preferably less than 0.60 m, more preferably less than 0.40 m, more preferably less than 0.20 m. Alternatively or additionally, a distance between the one or more first waste gas inlet and the first bed may be at least 0.05 m, preferably at least 0.10 m, more preferably at least 0.15 m.

Alternatively, the one or more first waste gas inlet may be positioned between at least a portion of the second bed and at least a portion of the reaction chamber. For example, the one or more first waste gas inlet may be a bore or a nozzle in a wall of the second transfer chamber. Alternatively, the one or more first oxygen-containing gas inlet may be a bore or a nozzle in a wall of the reaction chamber. The one or more first waste gas inlet between at least a portion of the second bed and the portion of the reaction chamber may be designed and/or positioned and/or disposed similar or equally than the one or more first waste gas inlet between at least a portion of the first bed and the portion of the reaction chamber.

For example, a distance between the one or more first waste gas inlet and at least a portion of the second bed may be less than 2.00 m, preferably less than 1.50 m, more preferably less than 1.00 m, more preferably less than 0.80 m, more preferably less than 0.60 m, more preferably less than 0.40 m, more preferably less than 0.20 m. Alternatively or additionally, a distance between the one or more first waste gas inlet and at least a portion of the second bed may be at least 0.05 m, preferably at least 0.10 m, more preferably at least 0.15 m.

It is preferred that the one or more first waste gas inlet is positioned closer to the reaction chamber than to an inlet of the oxygen-containing gas into the regenerative thermal oxidizer. More preferably, the one or more first waste gas inlet is positioned closer to the reaction chamber than to an inlet of the oxygen-containing gas into the first transfer chamber or into the second transfer chamber.

In general, the portion of the reaction chamber may be any portion of the reaction chamber. Preferably, a distance between the portion of the reaction chamber and a bed, for example the first bed and/or the second bed, may be at least 0.20 m, preferably at least 0.40 m, more preferably at least 0.60 m, more preferably at least 0.80 m, more preferably at least 1.00 m, more preferably at least 1.20 m, more preferably at least 1.50 m, more preferably at least 2.00 m. Alternatively or additionally, a distance between the portion of the reaction chamber and a bed, for example the first bed and/or the second bed, may be at most 2.50 m, preferably at most 2.00 m, more preferably at most 1.50 m, more preferably at most 1.20 m, more preferably at most 1.00 m, more preferably at most 0.80 m, more preferably at most 0.60 m, more preferably at most 0.40 m. A distance between the portion of the reaction chamber and a bed, for example the first bed and/or the second bed, may be about 2.00 m, about 1.50 m, about 1.00 m or about 0.50 m.

In general, a distance may be a shortest distance between two objects or elements or points (e.g. the length of the space between two objects or elements or points).

In general, the first portion of waste gas may be introduced into the regenerative thermal oxidizer such that the first portion of waste gas is introduced into a bed, for example the first bed or the second bed. Alternatively or additionally, the first portion of waste gas may be introduced into the regenerative thermal oxidizer such that the first portion of waste gas introduced outside a bed, for example the first bed or the second bed.

In general, the portion of a bed, for example the portion of the first bed or a portion of the second bed, may be any portion of the bed. The portion of the bed may be an upper portion or a lower portion of the bed. The portion of the bed may be located between an upper portion and a lower portion of the bed. For example, the portion of the bed may be a portion that is an outermost portion of the bed in downstream direction. For example, the portion of the bed may be a portion that is an outermost, upper or lower half portion of the bed in downstream direction. Also, the portion of the bed may be a portion that is an outermost portion of the bed in upstream direction. Also, the portion of the bed may be a portion that is an outermost, upper or lower half portion of the bed in upstream direction.

When oxygen-containing gas flows through a bed, for example the first bed and/or the second bed, to the reaction chamber, the oxygen-containing gas may be preheated. At the same time, the bed may be cooled. When gas, for example flue gas produced by oxidizing the oxidizable compound of the waste gas in the reaction chamber, flows from the reaction chamber through a bed, for example the first bed and/or the second bed, the gas may be cooled. At the same time, the bed may be heated.

Oxygen of the oxygen-containing gas may be used to oxidize the oxidizable compound of the waste gas. Preferably, oxygen of the oxygen-containing gas may not be used to fire a burner.

The oxygen-containing gas may be introduced into the regenerative thermal oxidizer to provide oxygen in the reaction chamber. In the reaction chamber, the oxygen may oxidize the oxidizable compound of the waste gas.

The regenerative thermal oxidizer comprises the one or more first waste gas inlet for introducing the first portion of waste gas into the regenerative thermal oxidizer positioned between at least a portion of the first bed and at least a portion of the reaction chamber. Further, the thermal oxidizer comprises one or more second waste gas inlet for introducing the first portion of waste gas into the regenerative thermal oxidizer positioned between at least a portion of the second bed and at least a portion of the reaction chamber. The portion of the reaction chamber may be one portion or the same portion of the reaction chamber.

The one or more first waste gas inlet may correspond to the first transfer chamber, preferably correspond to the first bed. The one or more second waste gas inlet may correspond to the second transfer chamber, preferably correspond to the second bed.

When the one or more first waste gas inlet is open to introduce the first portion of waste gas into the regenerative thermal oxidizer, the one or more second waste gas inlet may be closed such that no waste gas is introduced into the regenerative thermal oxidizer via the one or more second waste gas inlet. When the one or more second waste gas inlet is open to introduce the first portion of waste gas into the regenerative thermal oxidizer, the one or more first waste gas inlet may be closed such that no waste gas is introduced into the regenerative thermal oxidizer via the one or more first waste gas inlet.

Preferably, only the one or more first waste gas inlet is open at a point in time. Only the one or more second waste gas inlet may be open at a point in time.

The regenerative thermal oxidizer may comprise a heater. The one or more first waste gas inlet may be positioned or disposed closer to the first bed than to the heater. Preferably, a distance between the one or more first waste gas inlet and the first bed may be smaller than a distance between the one or more first waste gas inlet and the heater. The distance between the one or more first waste gas inlet and the first bed may be smaller by at least 0.10 m, preferably by at least 0.20 m, more preferably by at least 0.30 m, more preferably by at least 0.50 m, than a distance between the one or more first waste gas inlet and the heater.

A distance between the one or more first waste gas inlet and the heater may be at least 0.10 m, preferably at least 0.20 m, more preferably at least 0.30 m, more preferably at least 0.40 m, more preferably at least 0.50 m, more preferably at least 0.75 m, more preferably at least 1.00 m, more preferably at least 1.50 m, more preferably at least 2.00 m.

The one or more second waste gas inlet may be positioned similarly or equally relative to the heater and/or relative to the second bed as the one or more first waste gas inlet.

At least a second portion of waste gas may be introduced into the regenerative thermal oxidizer to flow through the first bed to the reaction chamber. Alternatively or additionally, at least a second portion of waste gas may be introduced into the regenerative thermal oxidizer to flow through the second bed to the reaction chamber.

For example, the first portion of waste gas may be introduced into the regenerative thermal oxidizer without flowing through a bed. At the same time, the second portion of waste gas may be introduced into the regenerative thermal oxidizer to flow through a bed. The second portion of waste gas may be preheated by flowing through the bed.

The first portion and the second portion of waste gas may originate from the waste gas source. The flow of waste gas may be split into the first portion of waste gas and into the second portion of waste gas. The first portion of waste gas may be introduced into the regenerative thermal oxidizer without dilution, for example without dilution by oxygen-containing gas. The second portion of waste gas may be introduced into the regenerative thermal oxidizer with dilution, for example with dilution by oxygen-containing gas.

Oxygen-containing gas and the second portion of waste may be introduced into the regenerative thermal oxidizer together, for example as a mixture. Oxygen in the mixture of the oxygen-containing gas and the second portion of waste gas may be sufficient to oxidize oxidizable compounds of the first portion of waste and the second portion of waste gas in the regenerative thermal oxidizer.

The first portion of waste may be at least 10 %, preferably at least 20 %, more preferably at least 30 %, more preferably at least 40 %, more preferably at least 50 %, more preferably at least 60 %, more preferably at least 70 %, more preferably at least 80 %, more preferably at least 90 %, of the total amount of waste gas introduced into the regenerative thermal oxidizer. Additionally or alternatively, the first portion of waste may be at most 90 %, preferably at most 80 %, more preferably at most 70 %, more preferably at most 60 %, more preferably at most 50 %, more preferably at most 40 %, more preferably at most 30 %, more preferably at most 20 %, more preferably at most 10 %, of the total amount of waste gas introduced into the regenerative thermal oxidizer. The first portion of waste gas may be between 10 % and 90 %, preferably between 20 % and 80 %, more preferably between 30 % and 70 %, more preferably between 40 % and 60 %, more preferably between 45 % and 55 %, more preferably about 50 %, of the total amount of waste gas introduced into the regenerative thermal oxidizer.

The second portion of waste may be at least 10 %, preferably at least 20 %, more preferably at least 30 %, more preferably at least 40 %, more preferably at least 50 %, more preferably at least 60 %, more preferably at least 70 %, more preferably at least 80 %, more preferably at least 90 %, of the total amount of waste gas introduced into the regenerative thermal oxidizer. Additionally or alternatively, the second portion of waste may be at most 90 %, preferably at most 80 %, more preferably at most 70 %, more preferably at most 60 %, more preferably at most 50 %, more preferably at most 40 %, more preferably at most 30 %, more preferably at most 20 %, more preferably at most 10 %, of the total amount of waste gas introduced into the regenerative thermal oxidizer. The second portion of waste gas may be between 10 % and 90 %, preferably between 20 % and 80 %, more preferably between 30 % and 70 %, more preferably between 40 % and 60 %, more preferably between 45 % and 55 %, more preferably about 50 %, of the total amount of waste gas introduced into the regenerative thermal oxidizer.

The total amount of waste gas introduced into the regenerative thermal oxidizer may be the sum of the first portion of waste gas and the second portion of waste gas introduced into the regenerative thermal oxidizer.

The regenerative thermal oxidizer may comprise at least a third transfer chamber. The third transfer chamber may comprise a third bed. The reaction chamber may be in fluid flow communication with the third transfer chamber. The regenerative thermal oxidizer may comprise one or more third waste gas inlet for introducing the first portion of waste gas into the regenerative thermal oxidizer positioned between at least a portion of the third bed and at least a portion of the reaction chamber.

For example, the third transfer chamber may be a half-chamber. The first, second and third transfer chambers may be (partially) separated by a wall, at least two walls or at least three walls.

The one or more third waste gas inlet may be positioned between at least a portion of the third bed and at least a portion of the reaction chamber. The one or more third waste gas inlet may be a bore or a nozzle in a wall of the third transfer chamber.

A distance between the one or more third waste gas inlet and at least a portion of the third bed may be less than 2.00 m, preferably less than 1.50 m, more preferably less than 1.00 m, more preferably less than 0.80 m, more preferably less than 0.60 m, more preferably less than 0.40 m, more preferably less than 0.20 m. Alternatively or additionally, a distance between the one or more third waste gas inlet and at least a portion of the third bed may be at least 0.05 m, preferably at least 0.10 m, more preferably at least 0.15 m.

The one or more third waste gas inlet may be positioned closer to the reaction chamber than to an inlet of the waste gas into the regenerative thermal oxidizer.

A distance between the one or more third waste gas inlet and at least a portion of the third bed may be smaller than a distance between the third waste gas inlet and the heater. A distance between the one or more third waste gas inlet and at least a portion of the third bed may be smaller by at least 0.10 m, preferably by at least 0.20 m, more preferably by at least 0.30 m, more preferably by at least 0.50 m, than a distance between the one or more third waste gas inlet and the heater.

A distance between the one or more third waste gas inlet and the heater may be at least 0.10 m, preferably at least 0.20 m, more preferably at least 0.30 m, more preferably at least 0.40 m, more preferably at least 0.50 m, more preferably at least 0.75 m, more preferably at least 1.00 m, more preferably at least 1.50 m, more preferably at least 2.00 m.

The one or more third waste gas inlet may correspond to the third transfer chamber. When the one or more third waste gas inlet is open to introduce (the first portion of the) waste gas into the regenerative thermal oxidizer, the one or more first waste gas inlets and the one or more second waste gas inlet may be closed.

The regenerative thermal oxidizer may comprise at least two waste gas inlets per transfer chamber. Preferably, the regenerative thermal oxidizer comprises at least three waste gas inlets per transfer chamber. More preferably, the regenerative thermal oxidizer comprises at least four waste gas inlets per transfer chamber.

For example, the one or more first waste gas inlet may comprise at least two first waste gas inlets. The one or more first waste gas inlet may introduce (the first portion of the) waste gas into the regenerative thermal oxidizer. Each of the first waste gas inlets may correspond to the first transfer chamber. The first waste gas inlet may comprise at least three first waste gas inlets or at least four first waste gas inlets.

Similarly, the one or more second waste gas inlet may comprise at least two second waste gas inlets, at least three second waste gas inlets or at least four second waste gas inlets. Similarly, the one or more third waste gas inlet may comprise at least two third waste gas inlets, at least three third waste gas inlets or at least four third waste gas inlets.

Each of the transfer chambers may have a circular or polygonal (e.g., rectangular or square) cross section. The one or more first waste gas inlet, second waste gas inlet and/or third waste gas inlet may be evenly or non-evenly distributed along a circumference of the respective transfer chamber. For example, when the one or more first waste gas inlet comprises two, three or four first waste gas inlets, the two, three or four first waste gas inlets may be evenly or non-evenly distributed along the circumference of the first transfer chamber. Waste gas inlets of the one or more second waste gas inlet and/or the one or more third waste gas inlet may be similarly or equally positioned at the respective transfer chamber.

Each of the transfer chambers may comprise more than one transfer chamber. For example, the first, second and/or third transfer chamber may comprise at least two, at least three, at least four, at least five or at least ten transfer chambers.

As mentioned above, a system comprises a regenerative thermal oxidizer. A first waste gas tube connects a waste gas source with at least a second waste gas tube. The second waste gas tube connects the first waste gas tube with the regenerative thermal oxidizer.

The first waste gas tube may be any suitable tube for connecting the waste gas source with the second waste gas tube. The second waste gas tube may connect the first waste gas tube with the regenerative thermal oxidizer, preferably with the first, second and/or third transfer chamber.

The first waste gas tube may comprise one or more valves. The second waste gas tube may comprise one or more valves. Different sections of the first waste gas tube and/or the second waste gas tube may be open or closed, depending on the valve position of the one or more valves.

The oxygen-containing gas tube may be any suitable tube for connecting the oxygen-containing gas source with the regenerative thermal oxidizer such that the oxygen-containing gas source and the regenerative thermal oxidizer are in fluid flow communication. The oxygen-containing gas tube may comprise one or more valves. Different sections of the oxygen-containing gas tube may be open or closed, depending on the valve position of the one or more valves.

When oxygen-containing gas flows through a bed (e.g. the first bed or the second bed or the third bed) of a transfer chamber (e.g. the first transfer chamber or the second transfer chamber or the third transfer chamber) towards the reaction chamber, the oxygen-containing gas may be introduced into the regenerative thermal oxidizer upstream of the bed. The first portion of the waste gas may be introduced into the regenerative thermal oxidizer downstream of at least a portion of the bed. The second portion of the waste gas may be introduced into the regenerative thermal oxidizer upstream of the bed.

The system comprises a controller. The controller may be a hardware component configured to control the overall operations of the regenerative thermal oxidizer and/or the system. The controller may include at least one processor. A processor may be implemented as an array of a plurality of logic gates or can be implemented as combination of a microprocessor and a memory. A program executable by the microprocessor may be stored in the memory. The skilled person readily understands that the controller may be implemented in various hardware forms. Functions of the regenerative thermal oxidizer and/or of the system may be controlled by the controller.

The controller is configured to direct at least a first portion of waste gas via the first waste gas tube and via the second waste gas tube to the regenerative thermal oxidizer, such that the first portion of the waste gas enters the regenerative thermal oxidizer downstream of at least a portion of the first bed and/or downstream of at least a portion of the second bed.

The pressure in the waste gas source may be higher than the pressure in the regenerative thermal oxidizer. A pressure unit, for example a blower, may be arranged along the first and/or second waste gas tube for increasing the pressure of the waste gas. Similarly, a pressure unit, for example a blower, may be arranged along the oxygen-containing gas tube for increasing the pressure of the oxygen-containing gas.

The controller is configured to direct oxygen-containing gas via the oxygen-containing gas tube to the regenerative thermal oxidizer, such that the at least one oxidizable compound is oxidized in the reaction chamber. The oxygen-containing gas may be introduced into the regenerative thermal oxidizer upstream of a bed.

The system may comprise a third waste gas tube. The third waste gas tube may connect the waste gas source with the first transfer chamber. Alternatively or additionally, the third waste gas tube may connect the waste gas source with the second transfer chamber. The controller may be configured to direct the first portion of waste gas via the second waste gas tube to the regenerative thermal oxidizer. The controller may be configured to direct at least a second portion of waste gas via the third waste gas tube through the first bed to the reaction chamber, such that the second portion of the waste gas is preheated by the first bed. Alternatively or additionally, the controller may be configured to direct at least a second portion of waste gas via the third waste gas tube through the second bed to the reaction chamber, such that the second portion of the waste gas is preheated by the second bed.

The oxygen-containing gas and the second portion of waste gas may be introduced together, for example as a mixture, into the regenerative thermal oxidizer.

The controller may be configured to direct the oxygen-containing gas via the oxygen-containing gas tube through the first bed to the reaction chamber, such that the oxygen-containing gas is preheated by the first bed. Alternatively or additionally, the controller may be configured to direct the oxygen-containing gas via the oxygen-containing gas tube through the second bed to the reaction chamber, such that the oxygen-containing gas is preheated by the second bed.

During a first cycle, the controller may be configured to direct the first portion of waste gas via the second waste gas tube to the regenerative thermal oxidizer, such that the first portion of waste gas enters the regenerative thermal oxidizer downstream of at least a portion of the first bed. During a first cycle, the controller may be configured to direct the second portion of waste gas via the third waste gas tube through the first bed to the reaction chamber, such that the second portion of the waste gas is preheated by the first bed. During a second cycle, the controller may be configured to direct the first portion of waste gas via the second waste gas tube to the regenerative thermal oxidizer, such that the first portion of the waste gas enters the regenerative thermal oxidizer downstream of at least a portion of the second bed. During a second cycle, the controller may be configured to direct the second portion of waste gas via the third waste gas tube through the second bed to the reaction chamber, such that the second portion of the waste gas is preheated by the second bed.

In general, the regenerative thermal oxidizer or the system may perform predefined functions, preferably for a predetermined time period, in a cycle. In different cycles the functions performed by the regenerative thermal oxidizer or the system may be different. Also, different cycles may be performed for different time periods. The regenerative thermal oxidizer or the system may be configured to perform cycles repeatedly. For example, a first cycle may be performed. Then, a second cycle may be performed. Afterwards, a first cycle may be performed again followed by another second cycle, etc.

Preferably, the first cycle and the second cycle may be performed during different time periods. In other words, only one of the cycles may be performed in a point in time or during a time period. The first cycle and the second cycle may be consecutively performed, i.e., the second cycle follows the first cycle, the second cycle is followed by the first cycle, etc. Additional cycles may be performed before, between or after first and second cycles.

The first cycle may be performed for at least 10 s, preferably for at least 30 s, more preferably for at least 45 s, more preferably for at least 60 s, more preferably for at least 90 s, more preferably for at least 120 s. The second cycle may be performed for at least 10 s, preferably for at least 30 s, more preferably for at least 45 s, more preferably for at least 60 s, more preferably for at least 90 s, more preferably for at least 120 s, more preferably for at least 240 s.

During the first cycle, no oxygen-containing gas may be directed through the second bed to the reaction chamber. Alternatively or additionally, during the second cycle, no oxygen-containing gas may be directed through the first bed to the reaction chamber. During the first cycle, the second portion of waste gas may not be directed through the second bed to the reaction chamber. During the second cycle, the second portion of waste gas may not be directed through the first bed to the reaction chamber.

During the first cycle, the controller may be configured to direct flue gas, produced by oxidation of the oxidizable compound of the waste gas in the reaction chamber, from the reaction chamber through the second bed, such that the flue gas is cooled by the second bed. During the second cycle, the controller may be configured to direct the flue gas from the reaction chamber through the first bed, such that the flue gas is cooled by the first bed.

When the flue gas is cooled by the second bed, the second bed may be heated by the flue gas. When the flue gas is cooled by the first bed, the first bed may be heated by the flue gas.

Flue gas may be produced in the reaction chamber by reaction of the at least one oxidizable compound of the waste gas and oxygen of the oxygen-containing gas. The gas composition resulting from the reaction may be called flue gas. The reaction may be endothermic or exothermic.

The regenerative thermal oxidizer may comprise at least a third transfer chamber. The third transfer chamber may comprise a third bed. The reaction chamber may be in fluid flow communication with the third transfer chamber. During a third cycle, the controller may be configured to direct the first portion of waste gas via the second waste gas tube to the regenerative thermal oxidizer, such that the first portion of waste gas enters the regenerative thermal oxidizer downstream of at least a portion of the third bed. During a third cycle, the controller may be configured to direct the second portion of waste gas via the third waste gas tube through the third bed to the reaction chamber, such that the second portion of waste gas is preheated by the third bed. During a third cycle, the controller may be configured to direct oxygen-containing gas via the oxygen-containing gas tube through the third bed to the reaction chamber, such that the oxygen-containing gas is preheated by the third bed.

The regenerative thermal oxidizer may comprise at least three transfer chambers. The regenerative thermal oxidizer may be operated in at least three cycles or at least six cycles.

The system may comprise a bypass tube for connecting a heat exchanger with the regenerative thermal oxidizer, preferably for connecting the heat exchanger with the reaction chamber of the regenerative thermal oxidizer. The controller may be configured to direct gas from the regenerative thermal oxidizer to the heat exchanger such that the gas is cooled by the heat exchanger.

Preferably, flue gas from the reaction chamber of the regenerative thermal oxidizer may be directed to the heat exchanger. The flue gas may be cooled by the heat exchanger.

The heat exchanger may be configured to allow an exchange of (thermal) energy or heat between gas from the regenerative thermal oxidizer and the (first and/or second portion of the) waste gas prior to entry of the (first and/or second portion of the) waste gas into the regenerative thermal oxidizer. Also, the heat exchanger may be configured to allow an exchange of (thermal) energy or heat between gas from the regenerative thermal oxidizer and the oxygen-containing gas prior to entry of the oxygen-containing gas into the regenerative thermal oxidizer. Also, the heat exchanger may be configured to allow an exchange of (thermal) energy or heat between gas from the regenerative thermal oxidizer and a heat recovery system. Also, the heat exchanger may be configured to allow an exchange of (thermal) energy or heat between gas from the regenerative thermal oxidizer and a superheater, preferably a steam superheater.

Gas from the regenerative thermal oxidizer, preferably from the reaction chamber of the regenerative thermal oxidizer, may be directed to the heat exchanger during any one of the cycles. Preferably, gas from the regenerative thermal oxidizer, preferably from the reaction chamber of the regenerative thermal oxidizer, is directed to the heat exchanger during the first, second and third cycles.

The first portion of waste gas may comprise less than 20.0 vol.-% oxygen (O₂). Preferably, the first portion of waste gas comprises less than 17.5 vol.-% oxygen, more preferably less than 15.0 vol.-% oxygen, more preferably less than 12.5 vol.-% oxygen, more preferably less than 10.0 vol.-% oxygen, more preferably less than 9.0 vol.-% oxygen, more preferably less than 8.0 vol.-% oxygen, more preferably less than 7.0 vol.-% oxygen, more preferably less than 6.0 vol.-% oxygen, more preferably less than 5.0 vol.-% oxygen, more preferably less than 4.0 vol.-% oxygen, more preferably less than 3.0 vol.-% oxygen, more preferably less than 2.0 vol.-% oxygen, more preferably less than 1.0 vol.-% oxygen, more preferably less than 0.5 vol.-% oxygen, more preferably less than 0.1 vol.-% oxygen, in particular when entering the regenerative thermal oxidizer. The first portion of the waste gas may be free of oxygen, i.e., the first portion of the waste gas may comprise no oxygen.

When entering the regenerative thermal oxidizer, the first portion of the waste gas may have substantially the same composition as the waste gas at the waste gas source.

The second portion of waste gas may comprise at least 0.1 vol.-% oxygen (O₂). Preferably, the second portion of waste gas comprises at least 0.5 vol.-% oxygen, more preferably at least 1.0 vol.-% oxygen, more preferably at least 2.0 vol.-% oxygen, more preferably at least 3.0 vol.-% oxygen, more preferably at least 4.0 vol.-% oxygen, more preferably at least 6.0 vol.-% oxygen, more preferably at least 8.0 vol.-% oxygen, more preferably at least 10.0 vol.-% oxygen, more preferably at least 12.0 vol.-% oxygen, more preferably at least 14.0 vol.-% oxygen, more preferably at least 16.0 vol.-% oxygen, more preferably at least 18.0 vol.-% oxygen, more preferably at least 20.0 vol.-% oxygen, more preferably at least 22.0 vol.-% oxygen, more preferably at least 24.0 vol.-% oxygen, more preferably at least 26.0 vol.-% oxygen, more preferably at least 28.0 vol.-% oxygen more preferably at least 30.0 vol.-% oxygen.

When entering the regenerative thermal oxidizer, the second portion of waste gas may be a mixture of oxygen-containing gas and waste gas from the waste gas source. Also, when entering the regenerative thermal oxidizer, the second portion of waste gas may have substantially the same composition as the waste gas at the waste gas source.

The regenerative thermal oxidizer may comprise a heater. The heater may be configured to heat at least a portion of the regenerative thermal oxidizer. The heater may comprise a burner and/or an electrical heating element.

The heater may be configured to heat the reaction chamber and/or the beds of the regenerative thermal oxidizer.

The burner may be operated by fuel, for example a fuel gas. The fuel gas may comprise at least one hydrocarbon and/or hydrogen. Preferably, the fuel gas comprises hydrogen. The burner may be supplied with oxygen, for example with air, additionally, separately or independently from the oxygen-containing gas supplied to the regenerative thermal oxidizer used to oxidize the at least one oxidizable compound in the waste gas.

The electrical heating element may be a resistive heating element. The electrical heating element may be supplied with electrical energy from a renewable energy source. The renewable energy source may be wind energy or solar energy.

During a start-up cycle, the heater may heat the regenerative thermal oxidizer to a start temperature. For example, the reaction chamber and/or the beds may be heated to the start temperature. The first, second and/or third cycles may be performed after the start-up cycle.

Preferably, the heater is not operated during the first, second and/or third cycles. Alternatively, the heater may be operated during the first, second and/or third cycles.

During the start-up cycle, the heater may be controlled such that regenerative thermal oxidizer is heated to a predetermined temperature. No waste gas may be directed to the regenerative thermal oxidizer, preferably to the reaction chamber of the regenerative thermal oxidizer, during the start-up cycle.

The herein presented method may comprise: Directing at least a second portion of waste gas through the first bed, such that the second portion of the waste gas is preheated by the first bed.

During a first cycle, the method may comprise: Directing the first portion of waste gas to the reaction chamber of the regenerative thermal oxidizer, such that the first portion of waste gas enters the regenerative thermal oxidizer downstream of at least a portion of the first bed. During a first cycle, the method may comprise: Directing the oxygen-containing gas through the first bed to the reaction chamber of the regenerative thermal oxidizer. During a first cycle, the method may comprise: Directing the second portion of waste gas through the first bed of the regenerative thermal oxidizer. During a second cycle, the method may comprise: Directing the first portion of waste gas to the reaction chamber of the regenerative thermal oxidizer, such that the first portion of waste gas enters the regenerative thermal oxidizer downstream of at least a portion of a second bed of the regenerative thermal oxidizer. During a second cycle, the method may comprise: Directing the oxygen-containing gas through the second bed to the reaction chamber of the regenerative thermal oxidizer, such that the oxygen-containing gas is preheated by the second bed. During a second cycle, the method may comprise: Directing the second portion of waste gas through the second bed of the re-generative thermal oxidizer, such that the second portion of waste gas is preheated by the second bed.

The second portion of waste gas may be mixed with the oxygen-containing gas prior to entering the regenerative thermal oxidizer. The first portion of waste gas may be introduced into the regenerative thermal oxidizer separately from the second portion of waste gas and/or separately from the oxygen-containing gas. The first portion of waste gas, the second portion of waste gas and the oxygen-containing gas may be mixed in the regenerative thermal oxidizer, preferably in the reaction chamber of the regenerative thermal oxidizer.

A flow rate of the oxygen-containing gas into the regenerative thermal oxidizer may be controlled based on at least one of a composition of the waste gas and a flow rate of the waste gas (e.g., the sum of the flow rates of the first portion of waste gas and the second portion of waste gas). Preferably the flow rate of the oxygen-containing gas into the regenerative thermal oxidizer may be controlled based on both the composition of the waste gas and the flow rate of the waste gas (e.g., the sum of the flow rates of the first portion of waste gas and the second portion of waste gas).

The composition of the waste gas may be measured by one or more sensors. The flow rate of the waste gas may be measured by one or more sensors.

Specifically, the flow rate of the oxygen-containing gas into the regenerative thermal oxidizer may be controlled such that the amount of oxygen introduced into the regenerative thermal oxidizer is sufficient to oxidize the at least one oxidizable compound of the waste gas.

### BRIEF DESCRIPTION OF THE DRAWINGS

The above-mentioned attributes and other features and advantages of the present invention and the manner of attaining them will become more apparent and the present invention itself will be better understood by reference to the following description of embodiments of the present technique taken in conjunction with the accompanying drawings, wherein:
- Fig. 1: shows a system 1000 according to an embodiment;
- Fig. 2: shows a system 1000 according to an embodiment;
- Fig. 3a: shows a transfer chamber 141;
- Fig. 3b: shows a cross section view of the transfer chamber 141;
- Fig. 4: shows a regenerative thermal oxidizer 100;
- Fig. 5: shows a system 1000 during a first cycle;
- Fig. 6: shows the system 1000 during a second cycle;
- Fig. 7: Fig. 7 shows a system 1000 during a first cycle;
- Fig. 8: shows the system 1000 during a second cycle;
- Fig. 9: shows the system 1000 during a third cycle; and
- Fig. 10: shows a system 1000 during a start-up cycle.

Hereinafter, above-mentioned and other features of the present invention are described in detail. Various embodiments are described with reference to the drawings, wherein like reference numerals are used to refer to like elements throughout. In the following description, for purpose of explanation, numerous specific details are set forth in order to provide a thorough understanding of one or more embodiments It may benoted that the illustrated embodiments are intended to explain, and not to limit the invention. It may be evident that such embodiments may be practiced without these specific details.

It may be noted that terms like "first", "second" and "third" are merely used to distinguishing elements, not to count elements. For example, when a "second" element is addressed, this does not imply that a "first" element must be present.

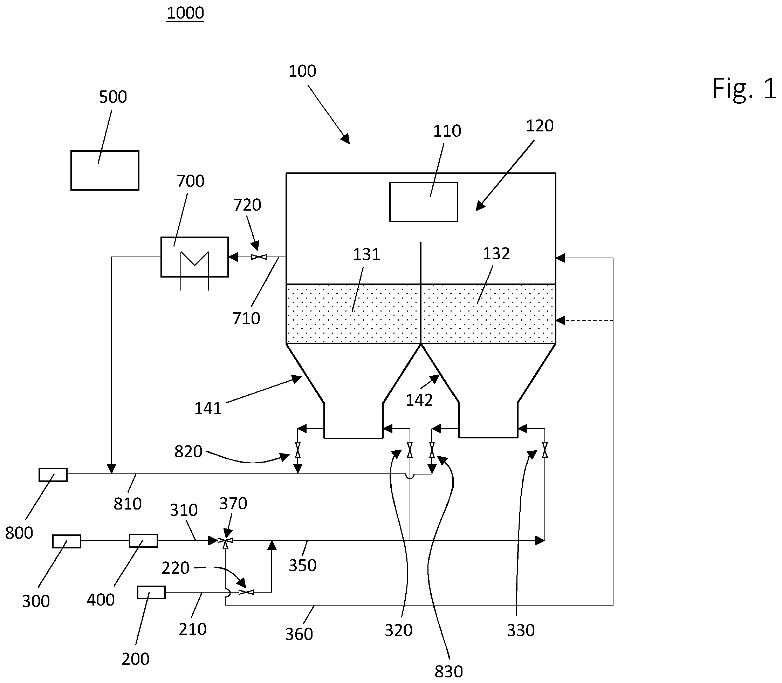

Fig. 1 schematically shows a system 1000. The system 1000 may comprise a regenerative thermal oxidizer 100.

The regenerative thermal oxidizer 100 may comprise a first transfer chamber 141 and a second transfer chamber 142. The first transfer chamber 141 may include a first bed 131. The second transfer chamber 142 may include a second bed 132. The first transfer chamber 141 and the second transfer chamber 142 may be in fluid flow communication with a reaction chamber 120 of the regenerative thermal oxidizer 100.

The first transfer chamber 141 and the second transfer chamber 142 may be physically separated such that the first bed 131 and the second bed 132 are physically separated from each other. The separation can be achieved by a wall which extends in the regenerative thermal oxidizer 100. At one side, the first transfer chamber 141 and the second transfer chamber 142 may be open, preferably towards the reaction chamber 120.

The extension of the wall separating the first bed 131 and the second bed 132 may define an upper end of the first transfer chamber 141 and the second transfer chamber 142. For example, an end of the wall separating the first bed 131 and the second bed 132 may define the end of the first transfer chamber 141 and the second transfer chamber 142.

The regenerative thermal oxidizer 100 may comprise a heater 110. The heater 110 may be used to heat at least a portion of the regenerative thermal oxidizer 100. For example, the reaction chamber 120 may be heated by the heater 110. Alternatively or additionally, the first bed 131 and the second bed 132 may be heated by the heater 110. The heater 110 may be a burner or an electrical heater.

The system 1000 may comprise a controller 500. The controller 500 may be configured to control the overall operation of the system 1000. The controller 500 may be configured to control the overall operation of the regenerative thermal oxidizer 100. The controller 500 may be located in an overall control station (not shown) of the system 1000. The controller 500 may be a part of a controlling computer of the system 1000.

The system 1000 may comprise a first waste gas tube 310. The first waste gas tube 310 may connect a waste gas source 300 and the regenerative thermal oxidizer 100.

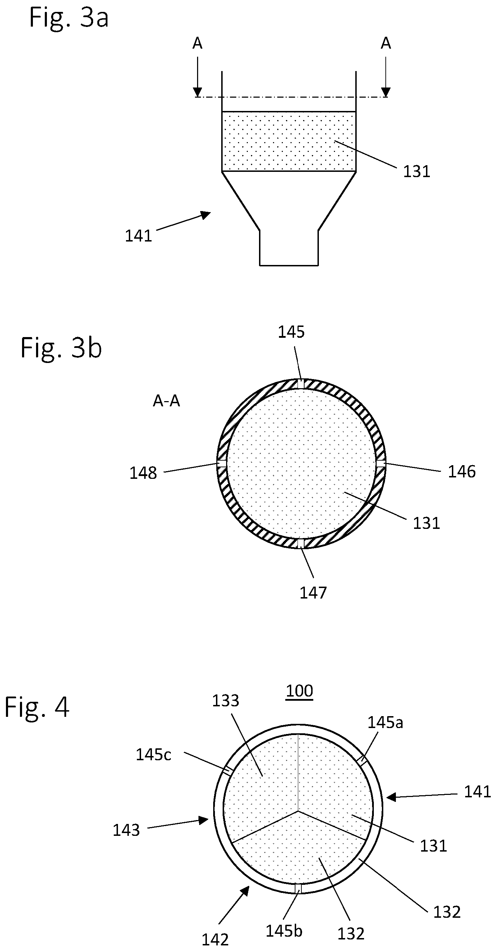

Specifically, the first waste gas tube 310 may be connected to a second waste gas tube 360. The second waste gas tube 360 may be connected to one or more waste gas inlet 145, 146, 147, 148 as will be described in more detail with reference to Figs. 3a and 3b.

Preferably, one or more first waste gas inlet 145, 146, 147, 148 corresponds to the first transfer chamber 141 and/or one or more second waste gas inlet 145, 146, 147, 148 corresponds to the second transfer chamber 142.

The one or more first waste gas inlet 145, 146, 147, 148 may be positioned such that the (first portion of the) waste gas enters the first bed 131 (indicated by a dashed arrow in Fig. 1). Also, the one or more first waste gas inlet 145, 146, 147, 148 may be positioned such that the (first portion of the) waste gas enters the regenerative thermal oxidizer 100 outside the first bed 131 (indicated by a solid arrow in Fig. 1).

The first waste gas tube 310 may be connected to a third waste gas tube 350. The third waste gas tube 350 may connect the waste gas source 300 and the first transfer chamber 141 and the second transfer chamber 142.

A first portion of waste gas may flow from the waste gas source 300 via the first waste gas tube 310 and the second waste gas tube 360 to the regenerative thermal oxidizer 100. A second portion of waste gas may flow from the waste gas source 300 via the first waste gas tube 310 and the third waste gas tube 350 to the regenerative thermal oxidizer 100.

A valve 370 may be implemented between the first waste gas tube 310, the second waste gas tube 360 and the third waste gas tube 350. At valve 370, waste gas from the waste gas source 300 may be split into a first portion of waste gas and a second portion of waste gas. A flow rate of the first portion of waste gas and the second portion of waste may be controlled, for example by valve 370.

The third waste gas tube 350 may comprise at least a first valve 320. The third waste gas tube 350 may comprise at least a second valve 330. When the first valve 320 is open, waste gas may flow from the waste gas source 300 to the first transfer chamber 141. When the first valve 320 is closed, waste gas may not flow from the waste gas source 300 to the first transfer chamber 141. When the second valve 330 is open, waste gas may flow from the waste gas source 300 to the second transfer chamber 142. When the second valve 330 is closed, waste gas may not flow from the waste gas source 300 to the second transfer chamber 142.

The pressure at the waste gas source 300 may be higher than at the first transfer chamber 141 and/or the second transfer chamber 142. Also, a pressure unit (not shown) may be disposed along the first waste gas tube 310, the second waste gas tube 360 and/or the third waste gas tube 350 to force the waste gas to the first transfer chamber 141 and/or to the second transfer chamber 142 and/or to the regenerative thermal oxidizer 100. The pressure unit may be a blower. The waste gas source 300 may be an exit or an outlet of a gas treatment unit.

A gas-liquid separation unit 400, for example a knock-out drum or demister, may be disposed along the first waste gas tube 310, the second waste gas tube 360 and/or the third waste gas tube 350. The gas-liquid separation unit 400 may separate and/or remove liquid components in the waste gas. Preferably, the gas-liquid separation unit 400 is positioned close to the waste gas source 300.

The system 1000 may comprise an oxygen-containing gas tube 210. The oxygen-containing gas tube 210 may connect an oxygen-containing gas source 200 with the regenerative thermal oxidizer 100, preferably with the first transfer chamber 141 and/or the second transfer chamber 142. Oxygen-containing gas may flow from the oxygen-containing gas source 200 via the oxygen-containing gas tube 210 to the regenerative thermal oxidizer 100.

Specifically, the oxygen-containing gas tube 210 may be connected to the third waste gas tube 360. Oxygen-containing gas may flow from the oxygen-containing gas source 200 to the third waste gas tube 350. The second portion of waste gas may be mixed with the oxygen-containing gas in the third waste gas tube 350.

The oxygen-containing gas tube 210 may comprise at least one valve 220. When the valve 220 is open, oxygen-containing gas may flow from the oxygen-containing gas source 200 to the regenerative thermal oxidizer 100, preferably via the third waste gas tube 350. When the valve 220 is closed, oxygen-containing gas may not flow from the oxygen-containing gas source 200 to the regenerative thermal oxidizer 100, preferably may not flow via the third waste gas tube 350 to the regenerative thermal oxidizer 100.

A pressure unit (not shown) may be disposed along the oxygen-containing gas tube 210 to force the oxygen-containing gas to the regenerative thermal oxidizer 100, in particular to the first transfer chamber 141 and/or to the second transfer chamber 142 via the third waste gas tube 350. The oxygen-containing gas source 200 may be surrounding air. The pressure unit may be a blower.

The system 1000 may comprise a flue gas tube 810. As will be described in more details below, an oxidizable compound of the waste gas may be oxidized in the reaction chamber 120 of the regenerative thermal oxidizer 100 by oxygen of the oxygen-containing gas. By oxidizing the oxidizable compound, flue gas may be produced in the reaction chamber 120.

The flue gas tube 810 may connect the first transfer chamber 141 and/or the second transfer chamber 142 with a flue gas outlet 800. Flue gas may flow from the regenerative thermal oxidizer 100, in particular from the reaction chamber 120 of the regenerative thermal oxidizer 100 or from the first transfer chamber 141 and/or from the second transfer chamber 142, via the flue gas tube 810 to the flue gas outlet 800.

The flue gas tube 810 may comprise at least a first valve 820. The flue gas tube 810 may comprise at least a second valve 830. When the first valve 820 is open, flue gas may flow from the first transfer chamber 141 to the flue gas outlet 800. When the first valve 820 is closed, flue gas may not flow from the first transfer chamber 141 to the flue gas outlet 800. When the second valve 830 is open, flue gas may flow from the second transfer chamber 142 to the flue gas outlet 800. When the second valve 830 is closed, flue gas may not flow from the second transfer chamber 142 to the flue gas outlet 800. The flue gas outlet 800 may be the environment of the regenerative thermal oxidizer 100. Thus, flue gas may be released to the environment.

The pressure in the first transfer chamber 141 and/or the second transfer chamber 142 may be higher than the pressure at the flue gas outlet 800. Also, the flue gas tube 810 may comprise a pressure unit (not shown) to force the flue gas towards the flue gas outlet 800. The pressure unit may be a blower.

The system 1000 may comprise a bypass tube 710. The bypass tube 710 may connect a heat exchanger 700 with the regenerative thermal oxidizer 100, in particular with the reaction chamber 120 of the regenerative thermal oxidizer 100. Gas may flow from the regenerative thermal oxidizer 100, in particular from the reaction chamber 120 of the regenerative thermal oxidizer 100 to the heat exchanger 700. The gas may be flue gas.

The gas may be cooled in the heat exchanger 700. For example, the heat exchanger 700 may be configured to transfer (thermal) energy from the gas to the waste gas (e.g., the first portion of waste gas and/or the second portion of waste gas) prior to entry of the waste gas into the regenerative thermal oxidizer, to the oxygen-containing gas prior to entry of the oxygen-containing gas into the regenerative thermal oxidizer, to a heat recovery system and/or to a superheater.

The bypass tube 710 may comprise at least one valve 720. When the valve 720 is open, gas may flow from the regenerative thermal oxidizer 100 to the heat exchanger 700. When the valve 720 is closed, gas may not flow from the regenerative thermal oxidizer 100 to the heat exchanger 700.

The pressure in the regenerative thermal oxidizer 100 may be higher than the pressure in the heat exchanger. Also, a pressure unit (not shown) may be disposed along the bypass tube 710 to force the gas from the regenerative thermal oxidizer 100 to the heat exchanger. The pressure unit may be a blower.

The heat exchanger 700 may be connected to the flue gas tube 800. Gas exiting the heat exchanger may be introduced into the flue gas tube 800.

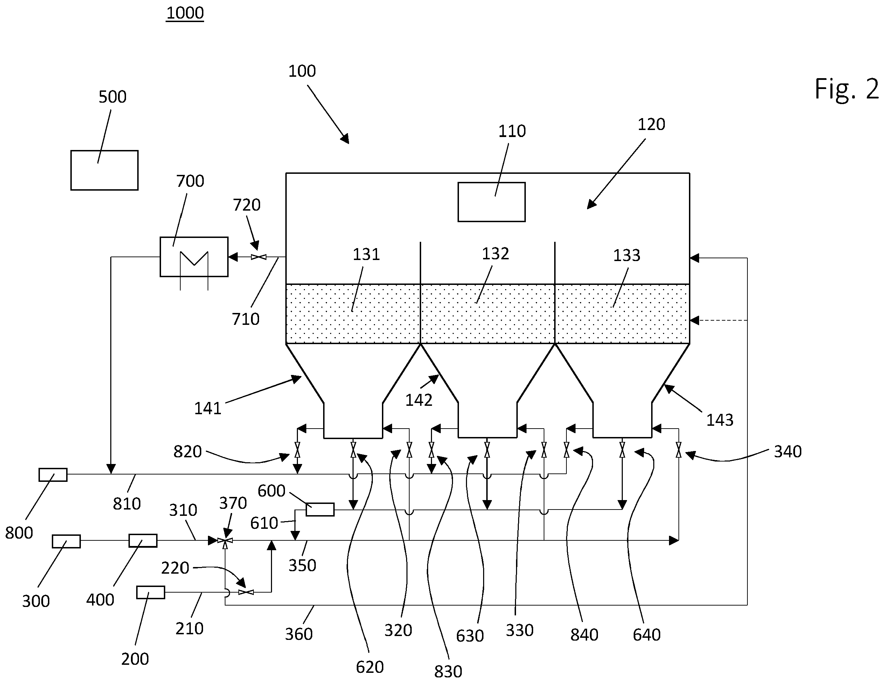

Fig. 2 schematically shows a system 1000. Some of the components of the system 1000 shown in Fig. 2 are equal to the same components of the system shown in Fig. 1. In the following, differences between Fig. 1 and Fig. 2 will be described.

The system 1000 may comprise a regenerative thermal oxidizer 100. The regenerative thermal oxidizer 100 may comprise a first transfer chamber 141, a second transfer chamber 142 and a third transfer chamber 143. The first transfer chamber 141 may include a first bed 131. The second transfer chamber 142 may include a second bed 132. The third transfer chamber 143 may include a third bed 133. The first transfer chamber 141, the second transfer chamber 142 and the third transfer chamber 143 may be in fluid flow communication with a reaction chamber 120 of the regenerative thermal oxidizer 100.

The first transfer chamber 141, the second transfer chamber 142 and the third transfer chamber 143 may be physically separated such that the first bed 131, the second bed 132 and the third bed 133 are physically separated from each other. The separation can be achieved by one or more walls which extend in the regenerative thermal oxidizer 100. For example, the first transfer chamber 141 and the second transfer chamber 142 may be separated by a first wall. The second transfer chamber 142 and the third transfer chamber 143 may be separated by a second wall.

The heater 110 may be configured to heat the reaction chamber 120. Alternatively or additionally, the first bed 131, the second bed 132 and the third bed may be heated by the heater 110.

The system 1000 may comprise a first waste gas tube 310. The first waste gas tube 310 may connect a waste gas source 300 and the regenerative thermal oxidizer 100. Specifically, the third waste gas tube 350 may connect the waste gas source 300 and the first transfer chamber 141, the second transfer chamber 142 and the third transfer chamber 143.

The third waste gas tube 350 may comprise at least a first valve 320, at least a second valve 330, and at least a third valve 340. When the first valve 320 is open, waste gas may flow from the waste gas source 300 to the first transfer chamber 141. When the first valve 320 is closed, waste gas may not flow from the waste gas source 300 to the first transfer chamber 141. When the second valve 330 is open, waste gas may flow from the waste gas source 300 to the second transfer chamber 142. When the second valve 330 is closed, waste gas may not flow from the waste gas source 300 to the second transfer chamber 142. When the third valve 340 is open, waste gas may flow from the waste gas source 300 to the third transfer chamber 143. When the third valve 340 is closed, waste gas may not flow from the waste gas source 300 to the third transfer chamber 143.

The one or more first waste gas inlet 145, 146, 147, 148 may be positioned such that the (first portion of the) waste gas enters the first bed 131 (indicated by a dashed arrow in Fig. 2). Also, the one or more first waste gas inlet 145, 146, 147, 148 may be positioned such that the (first portion of the) waste gas enters the regenerative thermal oxidizer 100 outside the first bed 131 (indicated by a solid arrow in Fig. 2).

The system 1000 may comprise an oxygen-containing gas tube 210. The oxygen-containing gas tube 210 may connect an oxygen-containing gas source 200 with the regenerative thermal oxidizer 100.

The system 1000 may comprise a flue gas tube 810. The flue gas tube 810 may connect the first transfer chamber 141, the second transfer chamber 142 and/or the third transfer chamber 143 with a flue gas outlet 800.

The flue gas tube 810 may comprise at least a first valve 820, at least a second valve 830 and at least a third valve 840. When the first valve 820 is open, flue gas may flow from the first transfer chamber 141 to the flue gas outlet 800. When the first valve 820 is closed, flue gas may not flow from the first transfer chamber 141 to the flue gas outlet 800. When the second valve 830 is open, flue gas may flow from the second transfer chamber 142 to the flue gas outlet 800. When the second valve 830 is closed, flue gas may not flow from the second transfer chamber 142 to the flue gas outlet 800. When the third valve 840 is open, flue gas may flow from the third transfer chamber 143 to the flue gas outlet 800. When the third valve 840 is closed, flue gas may not flow from the third transfer chamber 143 to the flue gas outlet 800.

The system may comprise a purge tube 610. The purge tube 610 may connect the third waste gas tube 350 with the first transfer chamber 141, the second transfer chamber 142 and the third transfer chamber 143. Gas, preferably flue gas, may flow from the first transfer chamber 141, the second transfer chamber 142 and/or the third transfer chamber 143 to the third waste gas tube 350.

The purge tube 610 may comprise a first valve 620, a second valve 630 and a third valve 640. When the first valve 620 is open, gas may flow from the first transfer chamber 141 to the third waste gas tube 350. When the first valve 620 is closed, gas may not flow from the first transfer chamber 141 to the third waste gas tube 350. When the second valve 630 is open, gas may flow from the second transfer chamber 142 to the third waste gas tube 350. When the second valve 630 is closed, gas may not flow from the second transfer chamber 142 to the third waste gas tube 350. When the third valve 640 is open, gas may flow from the third transfer chamber 143 to the third waste gas tube 350. When the third valve 640 is closed, gas may not flow from the third transfer chamber 143 to the third waste gas tube 350.

The purge gas tube 610 may comprise a pressure unit 600 to force the gas towards the third waste gas tube 350.

Fig. 3a schematically shows a transfer chamber of a regenerative thermal oxidizer 100. The transfer chamber will be described with reference to the first transfer chamber 141. Other transfer chambers of the regenerative thermal oxidizer, for example the second transfer chamber 142 and/or the third transfer chamber 143 may be designed in a similar or equal or equivalent way.

The first transfer chamber 141 comprises a bed 131. In Fig. 3a, a cut plane is indicated. The corresponding cross section view is shown in Fig. 3b.

The first transfer chamber 141 may have a circular or polygonal cross section. The polygonal cross section may be rectangular or square. The cross section may be oriented in a plane perpendicular to a flow direction of the waste gas through the first transfer chamber 141.

The first transfer chamber 141 may comprise a waste gas inlet 145. The waste gas inlet 145 may be a bore or a hole in the first transfer chamber 141, preferably in a side wall of the first transfer chamber 141. The waste gas inlet 145 may comprise a nozzle.

When oxygen-containing gas flows through the first bed 131 of the first transfer chamber 141 towards the reaction chamber 120 of the regenerative thermal oxidizer 100, the waste gas inlet 145 may be formed downstream of at least a portion of the first bed 131.

The waste gas inlet 145 may be positioned such that the waste gas, preferably the first portion of waste gas, enters the first bed 131 of the first transfer chamber 141. Also, the waste gas inlet 145 may be positioned such that the waste gas, preferably the first portion of waste gas, enters the regenerative thermal oxidizer 100 outside the first bed 131 of the first transfer chamber 141.

The first transfer chamber 141 may comprise two waste gas inlets 145, 146. Preferably the first transfer chamber 141 comprises three waste gas inlets 145, 146, 147, more preferably the first transfer chamber 141 comprises four waste gas inlets 145, 146, 147, 148, more preferably the first transfer chamber 141 comprises more than four waste gas inlets (not shown).

The one or more oxygen-containing gas inlets 145, 146, 147, 148 may be evenly or non-evenly distributed along a circumference of the first transfer chamber 141.

A distance between a portion of the first bed 131 and a first waste gas inlet 145 may be the same as a distance between the portion of the first bed 131 and a second waste gas inlet 146. Each of the waste gas inlets 145, 146, 147, 148 may have the same distance to the portion of the first bed 131. In general, the distance may be a distance in the flow direction of oxygen-containing gas through the first transfer chamber 141.

A distance between one or more of the waste gas inlets 145, 146, 147, 148 and the portion of the first bed 131 may be different than a distance of at least another one of the waste gas inlets 145, 146, 147, 148 and the portion of the first bed 131.

Fig. 4 schematically shows a regenerative thermal oxidizer 100 which functions in a similar way as the regenerative thermal oxidizer 100 as shown in Fig. 2 and as described with reference to Fig. 2.

The regenerative thermal oxidizer 100 may comprise a first transfer chamber 141, a second transfer chamber 142 and a third transfer chamber 143. The first transfer chamber 141 may comprise a first bed 131. The second transfer chamber 142 may comprise a second bed 132. The third transfer chamber 143 may comprise a third bed 133.

The first bed 131 may be positioned (directly) adjacent or between the second bed 132 and the third bed 133. The second bed 132 may be positioned (directly) adjacent or between the third bed 133 and the first bed 131. The third bed 133 may be positioned (directly) adjacent or between the first bed 131 and the second bed 132.

The regenerative thermal oxidizer 100 may comprise a housing 150. The housing 150 may have a substantially cylindrical shape or a substantially circular cross section. The first bed 131, the second bed 132 and the third bed 133 may be positioned in the housing 150.

The first transfer chamber 141 may comprise one or more first waste gas inlet 145a. The second transfer chamber 142 may comprise one or more second waste gas inlet 145b. The third transfer chamber 143 may comprise one or more waste gas inlet 145c.

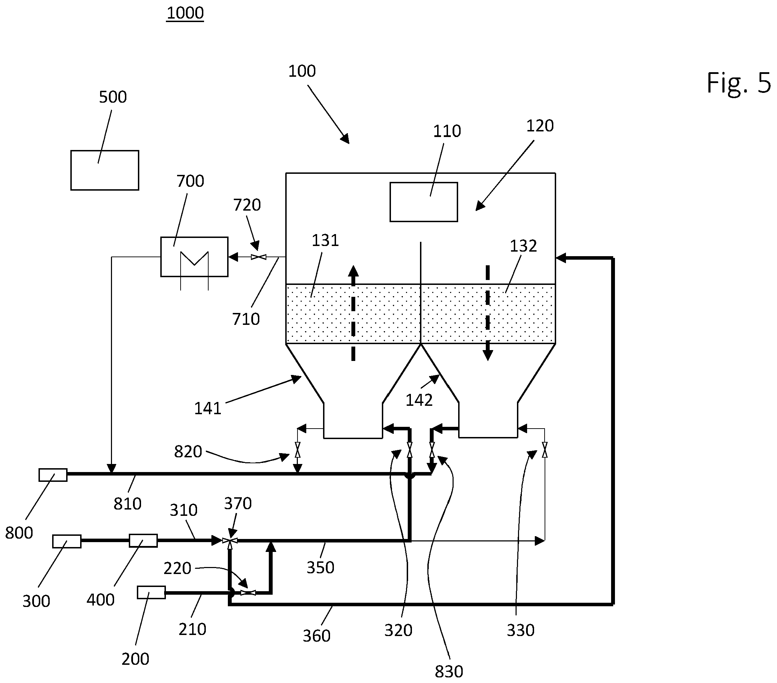

Fig. 5 schematically shows a system 1000 during a first cycle. The system 1000 may be similar or equal to the system as shown in Fig. 1 and described with reference to Fig. 1. Flow paths are indicated in the drawings by bold tubes or bold tube sections.

During the first cycle, the first portion of waste gas may be directed from the waste gas source 300 to the first transfer chamber 141. The first portion of waste gas may not be directed to the second transfer chamber 142. The first portion of waste gas may be introduced into the first bed 131 or outside the first bed 131. The first portion of waste gas may be introduced into the regenerative thermal oxidizer downstream of at least a portion of the first bed 131.

The second portion of waste gas may be directed from the waste gas source 300 through the first bed 131 towards the reaction chamber 120. The second portion of waste gas may not be directed to the second transfer chamber 142. For example, valve 320 may be in open state. Valve 330 may be in closed state.

The second portion of waste gas may flow through the first bed 131 (indicated by an arrow in Fig. 5). The first bed 131 may have a higher temperature than the second portion of waste gas such that the second portion of waste gas is preheated. The second portion of waste gas may then be directed to the reaction chamber 120 of the regenerative thermal oxidizer 100.

Oxygen-containing gas may be directed from the oxygen-containing gas source 200 to the regenerative thermal oxidizer 100. Specifically, oxygen-containing gas may be directed to the third waste gas tube 350. The oxygen-containing gas may be mixed with the second portion of waste gas. The mixture may be introduced into the regenerative thermal oxidizer 100. The oxygen-containing gas may flow through the first bed 131 and may be preheated by the first bed 131. For example, valve 220 may be in open state.

The at least one oxidizable compound in the waste gas (e.g., first portion of waste gas and second portion of waste gas) may be oxidized in the reaction chamber 120. The oxidization may be a reaction of the at least one oxidizable compound of the waste gas with oxygen of the oxygen-containing gas. Flue gas may be produced by the oxidation in the reaction chamber 120. The flue gas may have a higher temperature than the waste gas. For example, the oxidation may be an exothermic reaction. Thereby, heat may be produced in the reaction chamber 120. Alternatively or additionally, the reaction chamber 120 may be heated by the heater 110. However, preferably, the reaction chamber 120 is not heated by the heater during the first cycle.

The flue gas may be directed from the reaction chamber 120 to the second transfer chamber 142. Specifically, the flue gas may flow through the second bed 132 (indicated by an arrow in Fig. 5) of the second transfer chamber 142. The flue gas may have a higher temperature than the second bed 132. Thus, the second bed 132 may be heated by the flue gas. At the same time, the flue gas may be cooled by the second bed 132.

Flue gas may flow from the second transfer chamber 142 to the flue gas outlet 800. For example, valve 830 may be in open state. Valve 820 may be in closed state. Flue gas may not flow from the first transfer chamber 141 to the flue gas outlet.

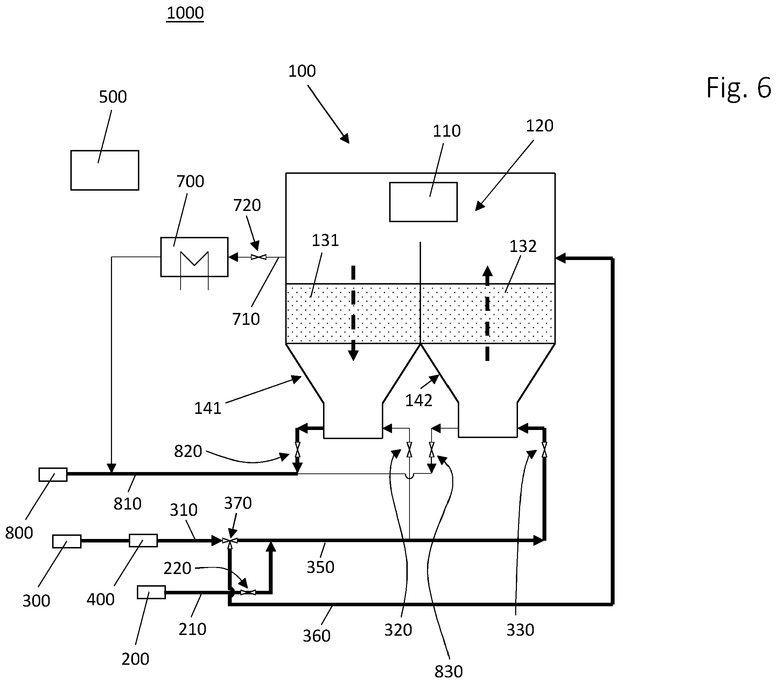

Fig. 6 schematically shows the system 1000 during a second cycle. The system 1000 may be similar or equal to the system as shown in Fig. 1 and described with reference to Fig. 1.

During the second cycle, the first portion of waste gas may be directed from the waste gas source 300 to the second transfer chamber 142. The first portion of waste gas may not be directed to the first transfer chamber 141. The first portion of waste gas may be introduced into the second bed 132 or outside the second bed 132. The first portion of waste gas may be introduced into the regenerative thermal oxidizer 100 downstream of at least a portion of the second bed 132.

The second portion of waste gas may be directed from the waste gas source 300 through the second bed 132 towards the reaction chamber 120. The second portion of waste gas may not be directed to the first transfer chamber 141. For example, valve 330 may be in open state. Valve 320 may be in closed state.

The second portion of waste gas may flow through the second bed 132 (indicated by an arrow in Fig. 6). The second bed 132 may have a higher temperature than the second portion of waste gas such that the second portion of waste gas is preheated. The second portion of waste gas may then be directed to the reaction chamber 120 of the regenerative thermal oxidizer 100.

Oxygen-containing gas may be directed from the oxygen-containing gas source 200 to the regenerative thermal oxidizer 100. Specifically, oxygen-containing gas may be directed to the third waste gas tube 350. The oxygen-containing gas may be mixed with the second portion of waste gas. The mixture may be introduced into the regenerative thermal oxidizer 100. The oxygen-containing gas may flow through the second bed 132 and may be preheated by the second bed 132. Valve 220 may be in open state.

The at least one oxidizable compound in the waste gas (e.g., first portion of waste gas and second portion of waste gas) may be oxidized in the reaction chamber 120 and flue gas may be produced. The reaction chamber 120 may be heated by the heater 110. However, preferably, the reaction chamber 120 is not heated by the heater 110 during the second cycle.

The flue gas may be directed from the reaction chamber 120 to the first transfer chamber 141. Specifically, the flue gas may flow through the first bed 131 (indicated by an arrow in Fig. 6) of the first transfer chamber 141. The flue gas may have a higher temperature than the first bed 131. Thus, the first bed 131 may be heated by the flue gas and the flue gas may be cooled by the first bed 131.

Flue gas may flow from the first transfer chamber 141 to the flue gas outlet 800. For example, valve 820 may be in open state. Valve 830 may be in closed state. Flue gas may not flow from the second transfer chamber 142 to the flue gas outlet.

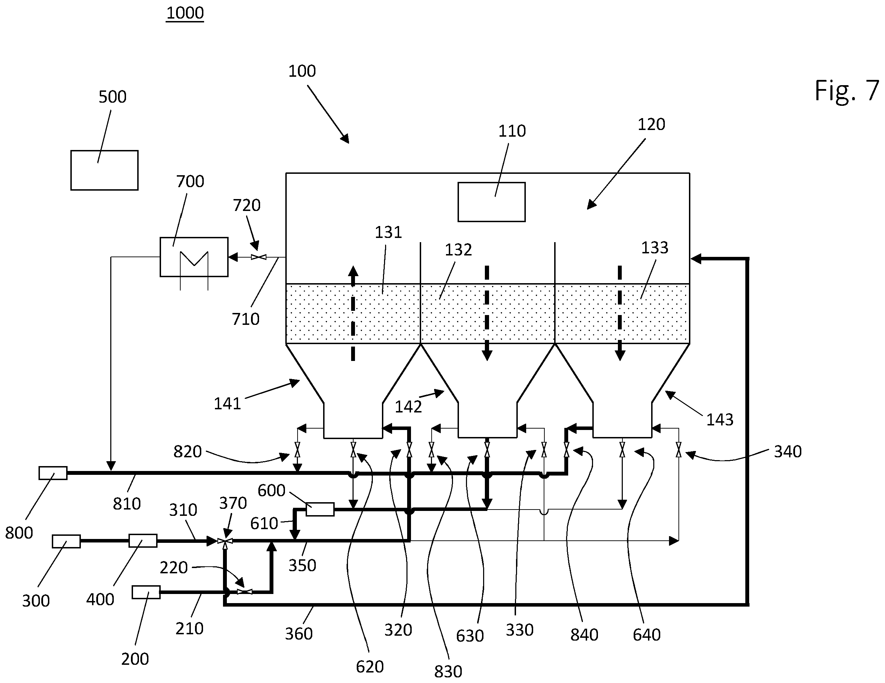

Fig. 7 schematically shows a system 1000 during a first cycle. The system 1000 may be similar or equal to the system as shown in Fig. 2 and described with reference to Fig. 2. Flow paths are indicated in the drawings by bold tubes or bold tube sections.

During the first cycle, the first portion of waste gas may be directed from the waste gas source 300 to the first transfer chamber 141. The first portion of waste gas may not be directed to the second transfer chamber 142 and/or the third transfer chamber 143. The first portion of waste gas may be introduced into the first bed 131 or outside the first bed 131. The first portion of waste gas may be introduced into the regenerative thermal oxidizer downstream of at least a portion of the first bed 131.

The second portion of waste gas may be directed from the waste gas source 300 through the first bed 131 towards the reaction chamber 120. The second portion of waste gas may not be directed to the second transfer chamber 142 and/or to the third transfer chamber 143. For example, valve 320 may be in open state. Valves 330 and 340 may be in closed state.

The second portion of waste gas may flow through the first bed 131 (indicated by an arrow in Fig. 7). The second portion of waste gas may be preheated. The second portion of waste gas may then be directed to the reaction chamber 120 of the regenerative thermal oxidizer 100.

Oxygen-containing gas may be directed from the oxygen-containing gas source 200 to the regenerative thermal oxidizer 100. Specifically, oxygen-containing gas may be directed to the third waste gas tube 350. The oxygen-containing gas may be mixed with the second portion of waste gas. The mixture may be introduced into the regenerative thermal oxidizer 100. The oxygen-containing gas may flow through the first bed 131 and may be preheated by the first bed 131. For example, valve 220 may be in open state.

The at least one oxidizable compound in the waste gas (e.g., first portion of waste gas and second portion of waste gas) may be oxidized in the reaction chamber 120. The oxidization may be a reaction of the at least one oxidizable compound of the waste gas with oxygen of the oxygen-containing gas. Flue gas may be produced by the oxidation in the reaction chamber 120. The flue gas may have a higher temperature than the waste gas. For example, the oxidation may be an exothermic reaction. Thereby, heat may be produced in the reaction chamber 120. Alternatively or additionally, the reaction chamber 120 may be heated by the heater 110. However, preferably, the reaction chamber 120 is not heated by the heater during the first cycle.

A portion of the flue gas may be directed from the reaction chamber 120 to the third transfer chamber 143. Specifically, the portion of the flue gas may flow through the third bed 133 (indicated by an arrow in Fig. 7) of the third transfer chamber 143. The portion of the flue gas may have a higher temperature than the third bed 133. Thus, the third bed 133 may be heated by the portion of the flue gas. At the same time, the portion of the flue gas may be cooled by the third bed 133.

The portion of the flue gas may flow from the third transfer chamber 143 to the flue gas outlet 800. For example, valve 840 may be in open state. Valves 820 and 830 may be in closed state. Flue gas may not flow from the first transfer chamber 141 and/or the second transfer chamber 142 to the flue gas outlet 800.

Another portion of the flue gas may be directed from the reaction chamber 120 to the second transfer chamber 142. Preferably, the portion of the flue gas may flow through the second bed 132 (indicated by an arrow in Fig. 7). The portion of the flue gas may flow from the second transfer chamber 142 to the purge tube 610. Preferably, the purge tube 610 is not in fluid flow communication with the first transfer chamber 141 and/or with the third transfer chamber 143 during the first cycle. For example, valve 630 may be in open state. Valve 620 may be in closed state. Valve 640 may be in closed state.

The portion of the flue gas may flow from the purge tube 610 to the third waste gas tube 350. From the third waste gas tube 350, the portion of the flue gas may enter the first transfer chamber 141, preferably together with waste gas. By directing a portion of the flue gas through the second transfer chamber 142, the second transfer chamber 142 may be purged or flushed.

Alternatively, oxygen-containing gas or another gas may be used to purge or flush the second transfer chamber 142. In this case, oxygen-containing gas or another gas may be directed to the second transfer chamber 142 and through the second bed 132 to the reaction chamber 120.

The portion of the flue gas that is directed through the second bed 132 may be smaller than the portion of the flue gas that is directed through the third bed 133. For example, less than 50 % of the flue gas, preferably less than 40 % of the flue gas, more preferably less than 30 % of the flue gas, more preferably less than 20 % of the flue gas, more preferably less than 10 % of the flue gas, may be directed through the second bed 132. The relative values (percentage values) are based on the total amount of flue gas that flows through the second bed 132 and the third bed 133.

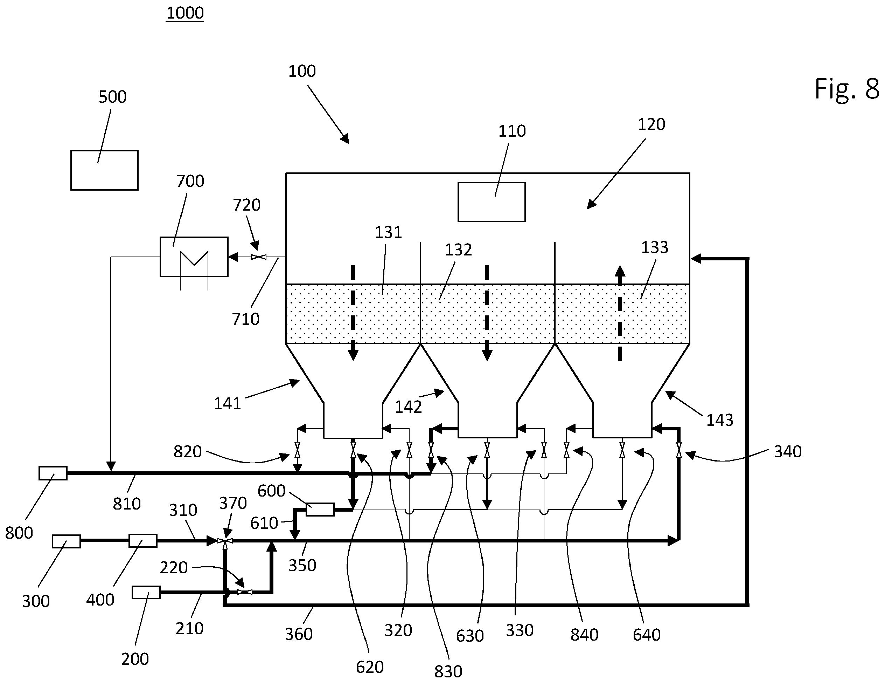

Fig. 8 schematically shows the system 1000 during a second cycle. The system 1000 may be similar or equal to the system as shown in Fig. 2 and described with reference to Fig. 2.

During the second cycle, the first portion of waste gas may be directed from the waste gas source 300 to the third transfer chamber 143. The first portion of waste gas may not be directed to the first transfer chamber 141 and/or the second transfer chamber 142. The first portion of waste gas may be introduced into the third bed 133 or outside the third bed 133. The first portion of waste gas may be introduced into the regenerative thermal oxidizer 100 downstream of at least a portion of the third bed 133.

The second portion of waste gas may be directed from the waste gas source 300 through the third bed 133 towards the reaction chamber 120. The second portion of waste gas may not be directed to the first transfer chamber 141 and/or to the second transfer chamber 142. For example, valve 340 may be in open state. Valves 320 and 330 may be in closed state.

The second portion of waste gas may flow through the third bed 133 (indicated by an arrow in Fig. 8). The second portion of waste gas may be preheated. The second portion of waste gas may then be directed to the reaction chamber 120 of the regenerative thermal oxidizer 100.

Oxygen-containing gas may be directed from the oxygen-containing gas source 200 to the regenerative thermal oxidizer 100. The oxygen-containing gas may be mixed with the second portion of waste gas in the third waste gas tube 350. The mixture may be introduced into the regenerative thermal oxidizer 100. The oxygen-containing gas may flow through the third bed 133 and may be preheated by the third bed 133. For example, valve 220 may be in open state.

The at least one oxidizable compound in the waste gas (e.g., first portion of waste gas and second portion of waste gas) may be oxidized in the reaction chamber 120. Flue gas may be produced by the oxidation in the reaction chamber 120. The flue gas may have a higher temperature than the waste gas. The reaction chamber 120 may be heated by the heater 110. However, preferably, the reaction chamber 120 is not heated by the heater during the second cycle.

A portion of the flue gas may be directed from the reaction chamber 120 to the second transfer chamber 142. Specifically, the portion of the flue gas may flow through the second bed 132 (indicated by an arrow in Fig. 8) of the second transfer chamber 142. The portion of the flue gas may have a higher temperature than the second bed 132 and the second bed 132 may be heated by the portion of the flue gas.

The portion of the flue gas may flow from the second transfer chamber 142 to the flue gas outlet 800. For example, valve 830 may be in open state. Valves 820 and 840 may be in closed state. Flue gas may not flow from the first transfer chamber 141 and/or the third transfer chamber 143 to the flue gas outlet 800.

Another portion of the flue gas may be directed from the reaction chamber 120 to the first transfer chamber 141. Preferably, the portion of the flue gas may flow through the first bed 131 (indicated by an arrow in Fig. 8). The portion of the flue gas may flow from the first transfer chamber 141 to the purge tube 610. Preferably, the purge tube 610 is not in fluid flow communication with the second transfer chamber 142 and/or with the third transfer chamber 143 during the second cycle. For example, valve 620 may be in open state. Valve 630 may be in closed state. Valve 640 may be in closed state.

The portion of the flue gas may flow from the purge tube 610 to the third waste gas tube 350. From the third waste gas tube 350, the portion of the flue gas may enter the third transfer chamber 143, preferably together with waste gas. By directing a portion of the flue gas through the first transfer chamber 141, the first transfer chamber 141 may be purged or flushed.

Alternatively, oxygen-containing gas or another gas may be used to purge or flush the first transfer chamber 141. In this case, oxygen-containing gas or another gas may be directed to the first transfer chamber 141 and through the first bed 131 to the reaction chamber 120.

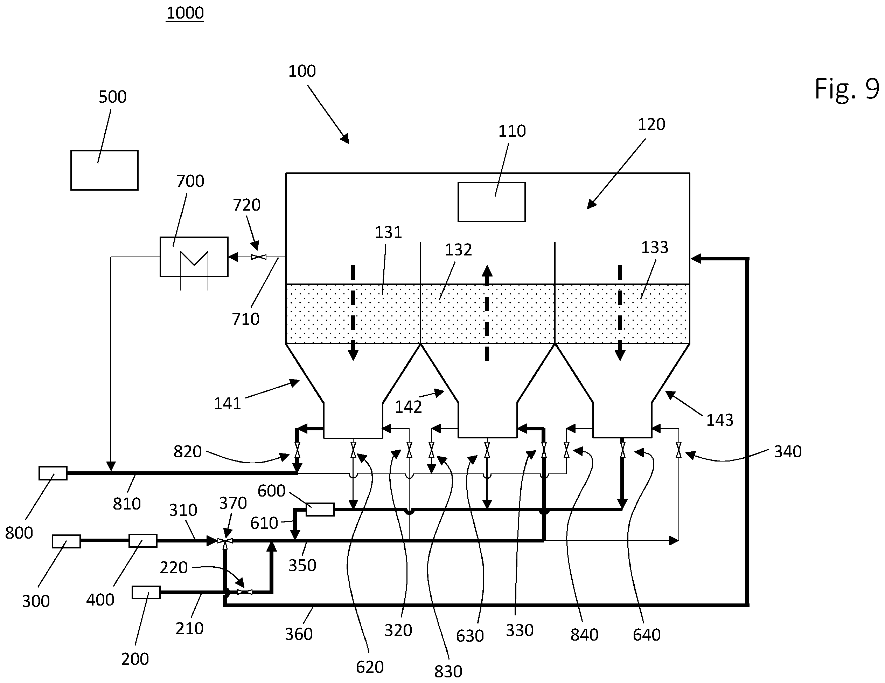

Fig. 9 schematically shows the system 1000 during a third cycle. The system 1000 may be similar or equal to the system as shown in Fig. 2 and described with reference to Fig. 2.

During the third cycle, the first portion of waste gas may be directed from the waste gas source 300 to the second transfer chamber 142. The first portion of waste gas may not be directed to the first transfer chamber 141 and/or the third transfer chamber 143. The first portion of waste gas may be introduced into the second bed 132 or outside the second bed 132. The first portion of waste gas may be introduced into the regenerative thermal oxidizer 100 downstream of at least a portion of the second bed 132.

The second portion of waste gas may be directed from the waste gas source 300 through the second bed 132 towards the reaction chamber 120. The second portion of waste gas may not be directed to the first transfer chamber 141 and/or to the third transfer chamber 143. For example, valve 330 may be in open state. Valves 320 and 340 may be in closed state.

The second portion of waste gas may flow through the second bed 132 (indicated by an arrow in Fig. 9). The second portion of waste gas may be preheated. The second portion of waste gas may then be directed to the reaction chamber 120 of the regenerative thermal oxidizer 100.

Oxygen-containing gas may be directed from the oxygen-containing gas source 200 to the regenerative thermal oxidizer 100. The oxygen-containing gas may be mixed with the second portion of waste gas in the third waste gas tube 350. The mixture may be introduced into the regenerative thermal oxidizer 100. The oxygen-containing gas may flow through the second bed 132 and may be preheated by the second bed 132. For example, valve 220 may be in open state.

The at least one oxidizable compound in the waste gas (e.g., first portion of waste gas and second portion of waste gas) may be oxidized in the reaction chamber 120. Flue gas may be produced by the oxidation in the reaction chamber 120. The flue gas may have a higher temperature than the waste gas. The reaction chamber 120 may be heated by the heater 110. However, preferably, the reaction chamber 120 is not heated by the heater during the second cycle.

A portion of the flue gas may be directed from the reaction chamber 120 to the first transfer chamber 141. Specifically, the portion of the flue gas may flow through the first bed 131 (indicated by an arrow in Fig. 9) of the first transfer chamber 141. The portion of the flue gas may have a higher temperature than the first bed 131 and the first bed 131 may be heated by the portion of the flue gas.

The portion of the flue gas may flow from the first transfer chamber 141 to the flue gas outlet 800. For example, valve 820 may be in open state. Valves 830 and 840 may be in closed state. Flue gas may not flow from the second transfer chamber 142 and/or the third transfer chamber 143 to the flue gas outlet 800.

Another portion of the flue gas may be directed from the reaction chamber 120 to the third transfer chamber 143. Preferably, the portion of the flue gas may flow through the third bed 133 (indicated by an arrow in Fig. 9). The portion of the flue gas may flow from the third transfer chamber 143 to the purge tube 610. Preferably, the purge tube 610 is not in fluid flow communication with the first transfer chamber 141 and/or with the second transfer chamber 142 during the third cycle. For example, valve 640 may be in open state. Valve 620 may be in closed state. Valve 630 may be in closed state.

The portion of the flue gas may flow from the purge tube 610 to the third waste gas tube 350. From the third waste gas tube 350, the portion of the flue gas may enter the second transfer chamber 142, preferably together with waste gas. By directing a portion of the flue gas through the third transfer chamber 143, the third transfer chamber 143 may be purged or flushed.

Alternatively, oxygen-containing gas or another gas may be used to purge or flush the third transfer chamber 143. In this case, oxygen-containing gas or another gas may be directed to the third transfer chamber 143 and through the third bed 133 to the reaction chamber 120.

The regenerative thermal oxidizer may be operated in six cycles.

For example, the first cycle may include a first subcycle and a second subcycle. During the first subcycle, the oxygen-containing gas and/or the second portion of waste gas may flow through the first bed 131 to the reaction chamber 120, the second bed 132 may be purged or flushed, and flue gas may be directed through the third bed 133 towards the flue gas outlet 800. During the second subcycle, the oxygen-containing gas and/or the second portion of waste gas may flow through the first bed 131 to the reaction chamber 120, the third bed 133 may be purged or flushed, and flue gas may be directed through the second bed 132 towards the flue gas outlet 800.

The second cycle may include a first subcycle and a second subcycle. During the first subcycle, the oxygen-containing gas and/or the second portion of waste gas may flow through the third bed 133 to the reaction chamber 120, the first bed 131 may be purged or flushed, and flue gas may be directed through the second bed 132 towards the flue gas outlet 800. During the second subcycle, the oxygen-containing gas and/or the second portion of waste gas may flow through the third bed 133 to the reaction chamber 120, the second bed 132 may be purged or flushed, and flue gas may be directed through the first bed 131 towards the flue gas outlet 800.

The third cycle may include a first subcycle and a second subcycle. During the first subcycle, the oxygen-containing gas and/or the second portion of waste gas may flow through the second bed 132 to the reaction chamber 120, the third bed 133 may be purged or flushed, and flue gas may be directed through the first bed 131 towards the flue gas outlet 800. During the second subcycle, the oxygen-containing gas and/or the second portion of waste gas may flow through the second bed 132 to the reaction chamber 120, the first bed 131 may be purged or flushed, and flue gas may be directed through the third bed 133 towards the flue gas outlet 800.

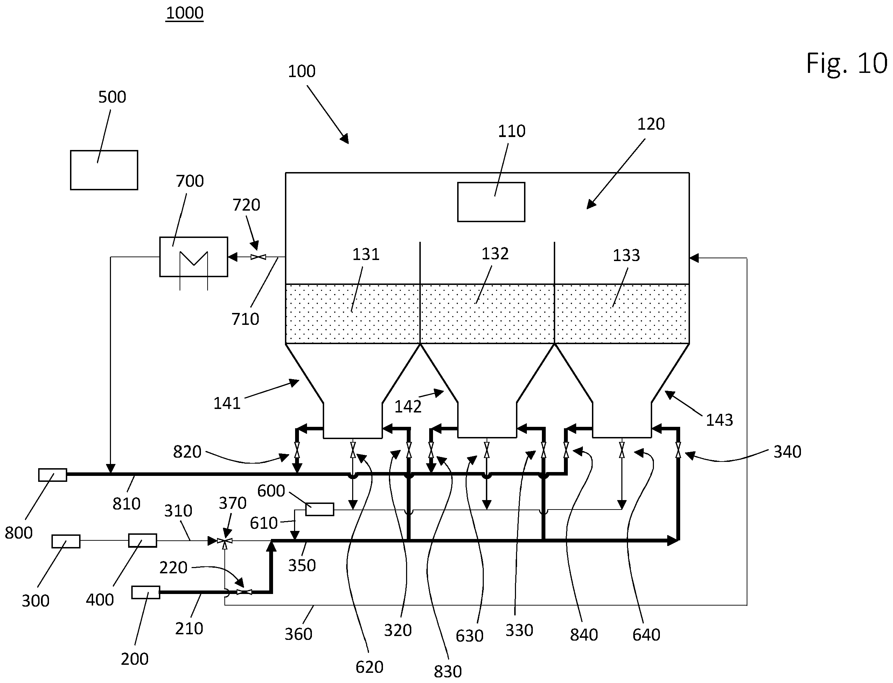

Fig. 10 schematically shows a system 1000 during a start-up cycle. The system 1000 may be similar or equal to the system as shown in Fig. 2 and described with reference to Fig. 2. Flow paths are indicated in the drawings by bold tubes or bold tube sections.

During the start-up cycle, the heater 110 may be operated to heat the regenerative thermal oxidizer 100. Preferably, at least the reaction chamber 120 and/or at least one of the first, second and third beds 131, 132, 133 are heated. The heater 110 may be a burner or an electrical heater.

The heater 110 may heat the reaction chamber 120 to a predetermined temperature, e.g., at least 500 °C or at least 800 °C. When the predetermined temperature in the reaction chamber 120 is reached, a first cycle, a second cycle or a third cycle as described above may be performed.

During the start-up cycle, a gas may flow through at least one of the first transfer chamber 141, the second transfer chamber 142 and the third transfer chamber 143. The gas may be oxygen-containing gas.

For example, the first transfer chamber 141, the second transfer chamber 142 and/or the third transfer chamber 143 may be in fluid flow communication with the oxygen-containing gas source 200. Valve 220 may be in open state. Valve 370 may be in closed state. Thereby, oxygen-containing gas may flow from the oxygen-containing gas source 200 to the first transfer chamber 141, the second transfer chamber 142 and/or the third transfer chamber 143.

The gas may flow through at least one of the first transfer chamber 141, the second transfer chamber 142 and/or the third transfer chamber 143 to the reaction room 120. From the reaction room 120, the gas may exit the regenerative thermal oxidizer 100 by flowing through at least one of the first transfer chamber 141, the second transfer chamber 142 and/or the third transfer chamber 143 to the flue gas tube 810. Valve 820, valve 830 and/or valve 840 may be in open state.

Generally, each of the described operations may be performed by the controller 500.

### LIST OF REFERENCE SIGNS

- 1000: System
- 100: Regenerative thermal oxidizer
- 110: Heater
- 120: Reaction chamber
- 131, 132, 133: Bed
- 141, 142, 143: Transfer chamber
- 145, 146, 147, 148: Waste gas inlet
- 145a, 145b, 145c: Waste gas inlet
- 150: Housing
- 200: Oxygen-containing gas source
- 210: Oxygen-containing gas tube
- 220: Valve
- 300: Waste gas source
- 310, 350, 360: Waste gas tube
- 320, 330, 340, 370: Valve
- 400: Gas-liquid separation unit
- 500: Controller
- 600: Pressure unit
- 610: Purge tube
- 620, 630, 640: Valve
- 700: Heat exchanger
- 710: Bypass tube
- 720: Valve
- 800: Flue gas outlet
- 810: Flue gas tube
- 820, 830, 840: Valve

## Claims

1. A regenerative thermal oxidizer (100) comprising:
at least a first transfer chamber (141, 142, 143) and at least a second transfer chamber (141, 142, 143), wherein the first transfer chamber (141, 142, 143) comprises a first bed (131, 132, 133) and the second transfer chamber (141, 142, 143) comprises a second bed (131, 132, 133);
at least one reaction chamber (120) in fluid flow communication with the first transfer chamber (141, 142, 143) and with the second transfer chamber (141, 142, 143); and
one or more first waste gas inlet (145, 146, 147, 148) for introducing at least a first portion of waste gas into the regenerative thermal oxidizer (100) positioned between at least a portion of the first bed (131, 132, 133) and at least a portion of the reaction chamber (120);
**characterised in that** the regenerative thermal oxidizer (100) further comprises:
one or more second waste gas inlet (145, 146, 147, 148) for introducing the first portion of waste gas into the regenerative thermal oxidizer (100) positioned between at least a portion of the second bed (131, 132, 133) and at least a portion of the reaction chamber (120).

2. The regenerative thermal oxidizer of claim 1, wherein at least a second portion of waste gas is introducible into the regenerative thermal oxidizer (100) to flow through the first bed (131, 132, 133) to the reaction chamber (120) or to flow through the second bed (131, 132, 133) to the reaction chamber (120).

3. The regenerative thermal oxidizer of any one of the preceding claims, wherein:
the regenerative thermal oxidizer (100) comprises at least a third transfer chamber (141, 142, 143), wherein the third transfer chamber (141, 142, 143) comprises a third bed (131, 132, 133);
the reaction chamber (120) is in fluid flow communication with the third transfer chamber (141, 142, 143); and
the regenerative thermal oxidizer (100) comprises one or more third waste gas inlet (145, 146, 147, 148) for introducing the first portion of waste gas into the regenerative thermal oxidizer (100) positioned between at least a portion of the third bed (131, 132, 133) and at least a portion of the reaction chamber (120).

4. A system (1000) comprising the regenerative thermal oxidizer (100) of any one of the preceding claims,
wherein the system (1000) further comprises:
a first waste gas tube (310) for connecting a waste gas source (300) with at least a second waste gas tube (360), wherein the second waste gas tube (360) connects the first waste gas tube (310) with the regenerative thermal oxidizer (100);
an oxygen-containing gas tube (210) for connecting an oxygen-containing gas source (200) with the regenerative thermal oxidizer (100); and
a controller (500);
wherein the controller (500) is configured to:
direct at least a first portion of waste gas via the first waste gas tube (310) and via the second waste gas tube (360) to the regenerative thermal oxidizer (100), such that the first portion of the waste gas enters the regenerative thermal oxidizer (100) downstream of at least a portion of the first bed (131, 132, 133) and/or downstream of at least a portion of the second bed (131, 132, 133), wherein the waste gas includes at least one oxidizable compound; and
direct oxygen-containing gas via the oxygen-containing gas tube (210) to the regenerative thermal oxidizer (100), such that the at least one oxidizable compound is oxidized in the reaction chamber (120).

5. The system of claim 4, wherein the system (1000) comprises a third waste gas tube (350) for connecting the waste gas source (300) with the first transfer chamber (141, 142, 143) and/or with the second transfer chamber (141, 142, 143),
wherein the controller (500) is configured to:
direct the first portion of waste gas via the second waste gas tube (360) to the regenerative thermal oxidizer (100); and
direct at least a second portion of waste gas via the third waste gas tube (350) through the first bed (131, 132, 133) and/or through the second bed (131, 132, 133) to the reaction chamber (120), such that the second portion of the waste gas is preheated by the first bed (131, 132, 133) and/or by the second bed (131, 132, 133).

6. The system of any one of claims 4 or 5, wherein the controller (500) is configured to direct the oxygen-containing gas via the oxygen-containing gas tube (210) through the first bed (131, 132, 133) and/or through the second bed (131, 132, 133) to the reaction chamber (120), such that the oxygen-containing gas is preheated by the first bed (131, 132, 133) and/or by the second bed (131, 132, 133).

7. The system of claim 5, wherein, during a first cycle, the controller (500) is configured to:
direct the first portion of waste gas via the second waste gas tube (360) to the regenerative thermal oxidizer (100), such that the first portion of waste gas enters the regenerative thermal oxidizer (100) downstream of at least a portion of the first bed (131, 132, 133); and
direct the second portion of waste gas via the third waste gas tube (350) through the first bed (131, 132, 133) to the reaction chamber (120), such that the second portion of waste gas is preheated by the first bed (131, 132, 133); and
wherein, during a second cycle, the controller (500) is configured to:
direct the first portion of waste gas via the second waste gas tube (360) to the regenerative thermal oxidizer (100), such that the first portion of waste gas enters the regenerative thermal oxidizer (100) downstream of at least a portion of the second bed (131, 132, 133); and
direct the second portion of waste gas via the third waste gas tube (350) through the second bed (131, 132, 133) to the reaction chamber (120), such that the second portion of waste gas is preheated by the second bed (131, 132, 133).

8. The system of claim 7, wherein, during the first cycle, the controller (500) is configured to:
direct flue gas, produced by oxidation of the oxidizable compound of the waste gas in the reaction chamber (120), from the reaction chamber (120) through the second bed (131, 132, 133), such that the flue gas is cooled by the second bed (131, 132, 133); and
wherein, during the second cycle, the controller (500) is configured to:
direct the flue gas from the reaction chamber (120) through the first bed (131, 132, 133), such that the flue gas is cooled by the first bed (131, 132, 133).

9. The system of any one of claims 4 to 8, wherein the system (1000) further comprises a bypass tube (710) for connecting a heat exchanger (700) with the regenerative thermal oxidizer (100), wherein the controller (500) is configured to direct gas from the regenerative thermal oxidizer (100) to the heat exchanger (700) such that the gas is cooled by the heat exchanger (700).

10. The system of any one of claims 4 to 9, wherein the first portion of waste gas comprises less than 20.0 vol.-% oxygen, preferably less than 15.0 vol.-% oxygen, more preferably less than 10.0 vol.-% oxygen, more preferably less than 5.0 vol.-% oxygen, more preferably less than 1.0 vol.-% oxygen.

11. The system of any one of claims 5 to 8, wherein the second portion of waste gas comprises at least 1.0 vol.-% oxygen, preferably at least 3.0 vol.-% oxygen, more preferably at least 5.0 vol.-% oxygen, more preferably at least 10.0 vol.-% oxygen.

12. A method of operating a regenerative thermal oxidizer (100), wherein the regenerative thermal oxidizer comprises:
at least one reaction chamber (120);
at least a first transfer chamber (141, 142, 143) comprising a first bed (131, 132, 133);
at least a second transfer chamber (141, 142, 143) comprising a second bed (131, 132, 133);
one or more first waste gas inlet (145, 146, 147, 148) for introducing at least a first portion of waste gas into the regenerative thermal oxidizer (100) positioned between at least a portion of the first bed (131, 132, 133) and at least a portion of the reaction chamber (120); and
one or more second waste gas inlet (145, 146, 147, 148) for introducing the first portion of waste gas into the regenerative thermal oxidizer (100) positioned between at least a portion of the second bed (131, 132, 133) and at least a portion of the reaction chamber (120),
the method comprising the steps of:
directing the at least first portion of waste gas to the reaction chamber (120), such that the first portion of waste gas enters the regenerative thermal oxidizer through the one or more first waste gas inlet (145, 146, 147, 148) downstream of at least a portion of the first bed (131, 132, 133) of the regenerative thermal oxidizer (100), wherein the waste gas includes at least one oxidizable compound; and
directing oxygen-containing gas through the first bed (131, 132, 133) to the reaction chamber (120), such that the oxygen-containing gas is preheated by the first bed (131, 132, 133).

13. The method of claim 12, wherein the method further comprises the step of:
directing at least a second portion of waste gas through the first bed (131, 132, 133), such that the second portion of the waste gas is preheated by the first bed (131, 132, 133).

14. The method of claim 13, wherein the method comprises, during a first cycle, the steps of:
directing the first portion of waste gas to the reaction chamber (120) of the regenerative thermal oxidizer (100), such that the first portion of waste gas enters the regenerative thermal oxidizer downstream of at least a portion of the first bed (131, 132, 133);
directing the oxygen-containing gas through the first bed (131, 132, 133) to the reaction chamber (120) of the regenerative thermal oxidizer (100); and
directing the second portion of waste gas through the first bed (131, 132, 133) of the regenerative thermal oxidizer (100); and
wherein the method comprises, during a second cycle, the steps of:
directing the first portion of waste gas to the reaction chamber (120) of the regenerative thermal oxidizer (100), such that the first portion of waste gas enters the regenerative thermal oxidizer downstream of at least a portion of a second bed (131, 132, 133) of the regenerative thermal oxidizer (100);
directing the oxygen-containing gas through the second bed (131, 132, 133) to the reaction chamber (120) of the regenerative thermal oxidizer (100), such that the oxygen-containing gas is preheated by the second bed (131, 132, 133); and
directing the second portion of waste gas through the second bed (131, 132, 133) of the regenerative thermal oxidizer (100), such that the second portion of waste gas is preheated by the second bed (131, 132, 133).

## Patentansprüche

1. Regenerative thermische Oxidationsanlage (100), umfassend:
mindestens eine erste Transferkammer (141, 142, 143) und mindestens eine zweite Transferkammer (141, 142, 143), wobei die erste Transferkammer (141, 142, 143) ein erstes Bett (131, 132, 133) umfasst und die zweite Transferkammer (141, 142, 143) ein zweites Bett (131, 132, 133) umfasst;
mindestens eine Reaktionskammer (120) in Fluidströmungsverbindung mit der ersten Transferkammer (141, 142, 143) und mit der zweiten Transferkammer (141, 142, 143); und
einen oder mehrere erste Abgaseinlässe (145, 146, 147, 148) zum Einleiten mindestens eines ersten Abschnitts von Abgas in die regenerative thermische Oxidationsanlage (100), die zwischen mindestens einem Abschnitt des ersten Betts (131, 132, 133) und mindestens einem Abschnitt der Reaktionskammer (120) positioniert sind;
**dadurch gekennzeichnet, dass** die regenerative thermische Oxidationsanlage (100) weiter Folgendes umfasst:
einen oder mehrere zweite Abgaseinlässe (145, 146, 147, 148) zum Einleiten des ersten Abschnitts von Abgas in die regenerative thermische Oxidationsanlage (100), die zwischen mindestens einem Abschnitt des zweiten Betts (131, 132, 133) und mindestens einem Abschnitt der Reaktionskammer (120) positioniert sind.

2. Regenerative thermische Oxidationsanlage nach Anspruch 1, wobei mindestens ein zweiter Abschnitt von Gas in die regenerative thermische Oxidationsanlage (100) einführbar ist, um durch das erste Bett (131, 132, 133) zur Reaktionskammer (120) zu strömen oder um durch das zweite Bett (131, 132, 133) zur Reaktionskammer (120) zu strömen.

3. Regenerative thermische Oxidationsanlage nach einem der vorstehenden Ansprüche, wobei:
die regenerative thermische Oxidationsanlage (100) mindestens eine dritte Transferkammer (141, 142, 143) umfasst, wobei die dritte Transferkammer (141, 142, 143) ein drittes Bett (131, 132, 133) umfasst;
die Reaktionskammer (120) mit der dritten Transferkammer (141, 142, 143) in Fluidströmungskommunikation steht; und
die regenerative thermische Oxidationsanlage (100) einen oder mehrere dritte Abgaseinlässe zum Einleiten des ersten Abschnitts von Abgas in die regenerative thermische Oxidationsanlage (100) umfasst, die zwischen mindestens einem Abschnitt des dritten Betts (131, 132, 133) und mindestens einem Abschnitt der Reaktionskammer (120) positioniert sind.

4. System (1000), das die regenerative thermische Oxidationsanlage (100) nach einem der vorstehenden Ansprüche umfasst,
wobei das System (1000) weiter umfasst:
ein erstes Abgasrohr (310) zum Verbinden einer Abgasquelle (300) mit mindestens einem zweiten Abgasrohr (360), wobei das zweite Abgasrohr (360) das erste Abgasrohr (310) mit der regenerativen thermischen Oxidationsanlage (100) verbindet;
ein Rohr für sauerstoffhaltiges Gas (210) zum Verbinden einer Quelle von sauerstoffhaltigem Gas (200) mit der regenerativen thermischen Oxidationsanlage (100); und
eine Steuereinheit (500);
wobei die Steuereinheit (500) so konfiguriert ist, dass sie:
mindestens einen ersten Abschnitt von Abgas über das erste Abgasrohr (310) und über das zweite Abgasrohr (360) zur regenerativen thermischen Oxidationsanlage (100) zu leiten, sodass der erste Abschnitt des Abgases stromabwärts von mindestens einem Abschnitt des ersten Betts (131, 132, 133) und/oder stromabwärts von mindestens einem Abschnitt des zweiten Betts (131, 132, 133) in die regenerative thermische Oxidationsanlage (100) eintritt, wobei das Abgas mindestens eine oxidierbare Verbindung beinhaltet; und
sauerstoffhaltiges Gas über das Rohr für sauerstoffhaltiges Gas (210) zur regenerativen thermischen Oxidationsanlage (100) leitet, sodass die mindestens eine oxidierbare Verbindung in der Reaktionskammer (120) oxidiert wird.

5. System nach Anspruch 4, wobei das System (1000) ein drittes Abgasrohr (350) zum Verbinden der Abgasquelle (300) mit der ersten Transferkammer (141, 142, 143) und/oder mit der zweiten Transferkammer (141, 142, 143) umfasst,
wobei die Steuereinheit (500) so konfiguriert ist, das sie:
den ersten Abschnitt von Abgas über das zweite Abgasrohr (360) zur regenerativen thermischen Oxidationsanlage (100) zu leiten; und
mindestens einen zweiten Abschnitt von Abgas über das dritte Abgasrohr (350) durch das erste Bett (131, 132, 133) und/oder durch das zweite Bett (131, 132, 133) zur Reaktionskammer (120) zu leiten, sodass der zweite Abschnitt des Abgases durch das erste Bett (131, 132, 133) und/oder durch das zweite Bett (131, 132, 133) vorgewärmt wird.

6. System nach einem der Ansprüche 4 oder 5, wobei die Steuereinheit (500) dazu konfiguriert ist, das sauerstoffhaltige Gas über das Rohr für sauerstoffhaltiges Gas (210) durch das erste Bett (131, 132, 133) und/oder durch das zweite Bett (131, 132, 133) zur Reaktionskammer (120) zu leiten, sodass das sauerstoffhaltige Gas durch das erste Bett (131, 132, 133) und/oder durch das zweite Bett (131, 132, 133) vorgewärmt wird.

7. System nach Anspruch 5, wobei die Steuereinheit (500) so konfiguriert ist, dass sie während eines ersten Zyklus:
den ersten Abschnitt von Abgas über das zweite Abgasrohr (360) zur regenerativen thermischen Oxidationsanlage (100) zu leiten, sodass der erste Abschnitt von Abgas stromabwärts mindestens eines Abschnitts des ersten Betts (131, 132, 133) in die regenerative thermische Oxidationsanlage (100) eintritt; und
den zweiten Abschnitt von Abgas über das dritte Abgasrohr (350) durch das erste Bett (131, 132, 133) zur Reaktionskammer (120) zu leiten, sodass der zweite Abschnitt von Abgas durch das erste Bett (131, 132, 133) vorgewärmt wird; und
wobei die Steuereinheit (500) so konfiguriert ist, dass sie während eines zweiten Zyklus:
den ersten Abschnitt von Abgas über das zweite Abgasrohr (360) zur regenerativen thermischen Oxidationsanlage (100) zu leiten, sodass der erste Abschnitt von Abgas stromabwärts mindestens eines Abschnitts des zweiten Betts (131, 132, 133) in die regenerative thermische Oxidationsanlage (100) eintritt; und
den zweiten Abschnitt von Abgas über das dritte Abgasrohr (350) durch das zweite Bett (131, 132, 133) zur Reaktionskammer (120) zu leiten, sodass der zweite Abschnitt von Abgas durch das zweite Bett (131, 132, 133) vorgewärmt wird.

8. System nach Anspruch 7, wobei die Steuereinheit (500) so konfiguriert ist, dass sie während des ersten Zyklus:
Rauchgas, das durch Oxidation der oxidierbaren Verbindung des Abgases in der Reaktionskammer (120) erzeugt wird, aus der Reaktionskammer (120) durch das zweite Bett (131, 132, 133) leitet, sodass das Rauchgas durch das zweite Bett (131, 132, 133) abgekühlt wird; und
wobei die Steuereinheit (500) so konfiguriert ist, dass sie während des zweiten Zyklus:
das Rauchgas aus der Reaktionskammer (120) durch das erste Bett (131, 132, 133) leitet, sodass das Rauchgas durch das erste Bett (131, 132, 133) abgekühlt wird.

9. System nach einem der Ansprüche 4 bis 8, wobei das System (1000) weiter ein Bypassrohr (710) zum Verbinden eines Wärmetauschers (700) mit der regenerativen thermischen Oxidationsanlage (100) umfasst, wobei die Steuereinheit (500) so konfiguriert ist, dass sie Gas aus der regenerativen thermischen Oxidationsanlage (100) zum Wärmetauscher (700) leitet, sodass das Gas durch den Wärmetauscher (700) abgekühlt wird.

10. System nach einem der Ansprüche 4 bis 9, wobei der erste Abschnitt von Abgas weniger als 20,0 Vol.-% Sauerstoff, bevorzugt weniger als 15,0 Vol.-% Sauerstoff, bevorzugter weniger als 10,0 Vol.-% Sauerstoff, noch bevorzugter weniger als 5,0 Vol.-% Sauerstoff, noch bevorzugter weniger als 1,0 Vol.-% Sauerstoff umfasst.

11. System nach einem der Ansprüche 5 bis 8, wobei der zweite Abschnitt von Abgas mindestens 1,0 Vol.-% Sauerstoff, bevorzugt mindestens 3,0 Vol.-% Sauerstoff, bevorzugter mindestens 5,0 Vol.-% Sauerstoff, noch bevorzugter mindestens 10,0 Vol.-% Sauerstoff umfasst.

12. Verfahren zum Betreiben einer regenerativen thermischen Oxidationsanlage (100), wobei die regenerative thermische Oxidationsanlage Folgendes umfasst:
mindestens eine Reaktionskammer (120);
mindestens eine erste Transferkammer (141, 142, 143), die ein erstes Bett (131, 132, 133) umfasst;
mindestens eine zweite Transferkammer (141, 142, 143), die ein zweites Bett (131, 132, 133) umfasst;
einen oder mehrere erste Abgaseinlässe (145, 146, 147, 148) zum Einleiten mindestens eines ersten Abschnitts von Abgas in die regenerative thermische Oxidationsanlage (100), die zwischen mindestens einem Abschnitt des ersten Betts (131, 132, 133) und mindestens einem Abschnitt der Reaktionskammer (120) positioniert sind; und
einen oder mehrere zweite Abgaseinlässe (145, 146, 147, 148) zum Einleiten des ersten Abschnitts von Abgas in die regenerative thermische Oxidationsanlage (100), die zwischen mindestens einem Abschnitt des zweiten Betts (131, 132, 133) und mindestens einem Abschnitt der Reaktionskammer (120) positioniert sind,
wobei das Verfahren die Schritte umfasst zum:
Leiten von mindestens dem ersten Abschnitt von Abgas zur Reaktionskammer (120), sodass der erste Abschnitt von Abgas durch den einen oder mehrere erste Abgaseinlässe (145, 146, 147, 148) stromabwärts mindestens eines Abschnitts des ersten Betts (131, 132, 133) der regenerativen thermischen Oxidationsanlage (100) in die regenerative thermische Oxidationsanlage eintritt, wobei das Abgas mindestens eine oxidierbare Verbindung beinhaltet; und
Leiten von sauerstoffhaltigem Gas durch das erste Bett (131, 132, 133) zur Reaktionskammer (120), sodass das sauerstoffhaltige Gas durch das erste Bett (131, 132, 133) vorgewärmt wird.

13. Verfahren nach Anspruch 12, wobei das Verfahren weiter den Schritt umfasst zum:
Leiten von mindestens einem zweiten Abschnitt von Abgas durch das erste Bett (131, 132, 133), sodass der zweite Abschnitt des Abgases durch das erste Bett (131, 132, 133) vorgewärmt wird.

14. Verfahren nach Anspruch 13, wobei das Verfahren während eines ersten Zyklus die Schritte umfasst zum:
Leiten den ersten Abschnitt von Abgas zur Reaktionskammer (120) der regenerativen thermischen Oxidationsanlage (100), sodass der erste Abschnitt von Abgas stromabwärts von mindestens einem Abschnitt des ersten Betts (131, 132, 133) in die regenerative thermischen Oxidationsanlage eintritt;
Leiten das sauerstoffhaltige Gas durch das erste Bett (131, 132, 133) zur Reaktionskammer (120) der regenerativen thermischen Leiten (100); und
Leiten den zweiten Abschnitt von Abgas durch das erste Bett (131, 132, 133) der regenerativen thermischen Oxidationsanlage (100); und
wobei das Verfahren während eines zweiten Zyklus die Schritte umfasst zum:
Leiten den ersten Abschnitt von Abgas zur Reaktionskammer (120) der regenerativen thermischen Oxidationsanlage (100), sodass der erste Abschnitt von Abgas stromabwärts von mindestens einem Abschnitt eines zweiten Betts (131, 132, 133) der regenerativen thermischen Oxidationsanlage (100) in die regenerative thermische Oxidationsanlage eintritt;
Leiten des sauerstoffhaltigen Gases durch das zweite Bett (131, 132, 133) zur Reaktionskammer (120) der regenerativen thermischen Oxidationsanlage (100), sodass das sauerstoffhaltige Gas durch das zweite Bett (131, 132, 133) vorgewärmt wird; und
Leiten den zweiten Abschnitt von Abgas durch das zweite Bett (131, 132, 133) der regenerativen thermischen Oxidationsanlage (100), sodass der zweite Abschnitt von Abgas durch das zweite Bett (131, 132, 133) vorgewärmt wird.

## Revendications

1. Oxydeur thermique régénératif (100) comprenant :
au moins une première chambre de transfert (141, 142, 143) et au moins une deuxième chambre de transfert (141, 142, 143), dans lequel la première chambre de transfert (141, 142, 143) comprend un premier lit (131, 132, 133) et la deuxième chambre de transfert (141, 142, 143) comprend un deuxième lit (131, 132, 133) ;
au moins une chambre de réaction (120) en communication d'écoulement fluidique avec la première chambre de transfert (141, 142, 143) et avec la deuxième chambre de transfert (141, 142, 143) ; et
un ou plusieurs premiers orifices d'entrée de gaz résiduaire (145, 146, 147, 148) pour introduire au moins une première partie de gaz résiduaire dans l'oxydeur thermique régénératif (100), positionnés entre au moins une partie du premier lit (131, 132, 133) et au moins une partie de la chambre de réaction (120) ;
**caractérisé en ce que** l'oxydeur thermique régénératif (100) comprend en outre :
un ou plusieurs deuxièmes orifices d'entrée de gaz résiduaire (145, 146, 147, 148) pour introduire la première partie de gaz résiduaire dans l'oxydeur thermique régénératif (100), positionnés entre au moins une partie du deuxième lit (131, 132, 133) et au moins une partie de la chambre de réaction (120).

2. Oxydeur thermique régénératif selon la revendication 1, dans lequel au moins une seconde partie de gaz résiduaire peut être introduite dans l'oxydeur thermique régénératif (100) pour s'écouler à travers le premier lit (131, 132, 133) vers la chambre de réaction (120) ou pour s'écouler à travers le deuxième lit (131, 132, 133) vers la chambre de réaction (120).

3. Oxydeur thermique régénératif selon l'une quelconque des revendications précédentes, dans lequel :
l'oxydeur thermique régénératif (100) comprend au moins une troisième chambre de transfert (141, 142, 143), dans lequel la troisième chambre de transfert (141, 142, 143) comprend un troisième lit (131, 132, 133) ;
la chambre de réaction (120) est en communication d'écoulement fluidique avec la troisième chambre de transfert (141, 142, 143) ; et
l'oxydeur thermique régénératif (100) comprend un ou plusieurs troisièmes orifices d'entrée de gaz résiduaire (145, 146, 147, 148) pour introduire du gaz résiduaire dans l'oxydeur thermique régénératif (100), positionnés entre au moins une partie du troisième lit (131, 132, 133) et au moins une partie de la chambre de réaction (120).

4. Système (1000) comprenant l'oxydeur thermique régénératif (100) selon l'une quelconque des revendications précédentes,
dans lequel le système (1000) comprend en outre :
un premier tube de gaz résiduaire (310) pour raccorder une source de gaz résiduaire (300) à au moins un deuxième tube de gaz résiduaire (360), dans lequel le deuxième tube de gaz résiduaire (360) raccorde le premier tube de gaz résiduaire (310) à l'oxydeur thermique régénératif (100) ;
un tube de gaz contenant de l'oxygène (210) pour raccorder une source de gaz contenant de l'oxygène (200) à l'oxydeur thermique régénératif (100) ; et
un dispositif de commande (500) ;
dans lequel le dispositif de commande (500) est configuré pour :
diriger au moins une première partie de gaz résiduaire par le biais du premier tube de gaz résiduaire (310) et par le biais du deuxième tube de gaz résiduaire (360) vers l'oxydeur thermique régénératif (100), de telle sorte que la première partie du gaz résiduaire entre dans l'oxydeur thermique régénératif (100) en aval d'au moins une partie du premier lit (131, 132, 133) et/ou en aval d'au moins une partie du deuxième lit (131, 132, 133), dans lequel le gaz résiduaire inclut au moins un composé oxydable ; et
diriger le gaz contenant de l'oxygène par le biais du tube de gaz contenant de l'oxygène (210) vers l'oxydeur thermique régénératif (100) de telle sorte que le au moins un composé oxydable du gaz résiduaire soit oxydé dans la chambre de réaction (120).

5. Système selon la revendication 4, dans lequel le système (1000) comprend un troisième tube de gaz résiduaire (350) pour raccorder la source de gaz résiduaire (300) à la première chambre de transfert (141, 142, 143) et/ou à la deuxième chambre de transfert (141, 142, 143) ;
dans lequel le dispositif de commande (500) est configuré pour :
diriger la première partie de gaz résiduaire par le biais du deuxième tube de gaz résiduaire (360) vers l'oxydeur thermique régénératif (100) ; et
diriger au moins une seconde partie de gaz résiduaire par le biais du troisième tube de gaz résiduaire (350) à travers le premier lit (131, 132, 133) et/ou à travers le deuxième lit (131, 132, 133) jusqu'à la chambre de réaction (120) de telle sorte que la seconde partie du gaz résiduaire soit préchauffée par le premier lit (131, 132, 133) et/ou par le deuxième lit (131, 132, 133).

6. Système selon l'une quelconque des revendications 4 ou 5, dans lequel le dispositif de commande (500) est configuré pour diriger le gaz contenant de l'oxygène par le biais du tube de gaz contenant de l'oxygène (210) à travers le premier lit (131, 132, 133) et/ou à travers le deuxième lit (131, 132, 133) jusqu'à la chambre de réaction (120) de telle sorte que le gaz contenant de l'oxygène soit préchauffé par le premier lit (131, 132, 133) et/ou par le deuxième lit (131, 132, 133).

7. Système selon la revendication 5, dans lequel, pendant un premier cycle, le dispositif de commande (500) est configuré pour :
diriger la première partie de gaz résiduaire par le biais du deuxième tube de gaz résiduaire (360) vers l'oxydeur thermique régénératif (100) de telle sorte que la première partie de gaz résiduaire entre dans l'oxydeur thermique régénératif (100) en aval d'au moins une partie du premier lit (131, 132, 133) ; et
diriger la seconde partie de gaz résiduaire par le biais du troisième tube de gaz résiduaire (310) à travers le premier lit (131, 132, 133) vers la chambre de réaction (120) de telle sorte que la seconde partie de gaz résiduaire soit préchauffée par le premier lit (131, 132, 133) ; et
dans lequel, pendant un second cycle, le dispositif de commande (500) est configuré pour :
diriger la première partie de gaz résiduaire par le biais du deuxième tube de gaz résiduaire (360) vers l'oxydeur thermique régénératif (100) de telle sorte que la première partie de gaz résiduaire entre dans l'oxydeur thermique régénératif (100) en aval d'au moins une partie du deuxième lit (131, 132, 133) ; et
diriger la seconde partie de gaz résiduaire par le biais du troisième tube de gaz résiduaire (350) à travers le deuxième lit (131, 132, 133) vers la chambre de réaction (120) de telle sorte que la seconde partie de gaz résiduaire soit préchauffée par le deuxième lit (131, 132, 133).

8. Système selon la revendication 7, dans lequel, pendant le premier cycle, le dispositif de commande (500) est configuré pour :
diriger du gaz de combustion, produit par oxydation du composé oxydable du gaz résiduaire dans la chambre de réaction (120), à partir de la chambre de réaction (120) à travers le deuxième lit (131, 132, 133) de telle sorte que le gaz de combustion soit refroidi par le deuxième lit (131, 132, 133) ; et
dans lequel, pendant le second cycle, le dispositif de commande (500) est configuré pour :
diriger le gaz de combustion à partir de la chambre de réaction (120) à travers le premier lit (131, 132, 133) de telle sorte que le gaz de combustion soit refroidi par le premier lit (131, 132, 133).

9. Système selon l'une quelconque des revendications 4 à 8, dans lequel le système (1000) comprend en outre un tube de dérivation (710) pour raccorder un échangeur de chaleur (700) à l'oxydeur thermique régénératif (100), dans lequel le dispositif de commande (500) est configuré pour diriger du gaz à partir de l'oxydeur thermique régénératif (100) vers l'échangeur de chaleur (700) de telle sorte que le gaz soit refroidi par l'échangeur de chaleur (700).

10. Système selon l'une quelconque des revendications 4 à 9, dans lequel la première partie de gaz résiduaire comprend moins de 20,0 % en volume d'oxygène, de préférence moins de 15,0 % en volume d'oxygène, plus préférentiellement moins de 10,0 % en volume d'oxygène, plus préférentiellement moins de 5,0 % en volume d'oxygène, plus préférentiellement moins de 1,0 % en volume d'oxygène.

11. Système selon l'une quelconque des revendications 5 à 8, dans lequel la seconde partie de gaz résiduaire comprend au moins 1,0 % en volume d'oxygène, de préférence au moins 3,0 % en volume d'oxygène, plus préférentiellement au moins 5,0 % en volume d'oxygène, plus préférentiellement au moins 10,0 % en volume d'oxygène.

12. Procédé de fonctionnement d'un oxydeur thermique régénératif (100), dans lequel l'oxydeur thermique régénératif comprend :
au moins une chambre de réaction (120) ;
au moins une première chambre de transfert (141, 142, 143) comprenant un premier lit (131, 132, 133) ;
au moins une deuxième chambre de transfert (141, 142, 143) comprenant un deuxième lit (131, 132, 133) ;
un ou plusieurs premiers orifices d'entrée de gaz résiduaire (145, 146, 147, 148) pour introduire au moins une première partie de gaz résiduaire dans l'oxydeur thermique régénératif (100), positionnés entre au moins une partie du premier lit (131, 132, 133) et au moins une partie de la chambre de réaction (120) ; et
un ou plusieurs deuxièmes orifices d'entrée de gaz résiduaire (145, 146, 147, 148) pour introduire la première partie de gaz résiduaire dans l'oxydeur thermique régénératif (100), positionnés entre au moins une partie du deuxième lit (131, 132, 133) et au moins une partie de la chambre de réaction (120),
le procédé comprenant les étapes consistant à :
diriger la au moins la première partie de gaz résiduaire vers la chambre de réaction (120) de telle sorte que la première partie de gaz résiduaires entre dans l'oxydeur thermique régénératif par un ou plusieurs premiers orifices d'entrée de gaz résiduaire (145, 146, 147, 148) en aval d'au moins une partie du premier lit (131, 132, 133) de l'oxydeur thermique régénératif (100), dans lequel le gaz résiduaire inclut au moins un composé oxydable ; et
diriger du gaz contenant de l'oxygène à travers le premier lit (131, 132, 133) vers la chambre de réaction (120) de telle sorte que le gaz contenant de l'oxygène soit préchauffé par le premier lit (131, 132, 133).

13. Procédé selon la revendication 12, dans lequel le procédé comprend en outre l'étape consistant à :
diriger au moins une seconde partie de gaz résiduaire à travers le premier lit (131, 132, 133) de telle sorte que la seconde partie de gaz résiduaire soit préchauffée par le premier lit (131, 132, 133).

14. Procédé selon la revendication 13, dans lequel le procédé comprend, pendant un premier cycle, les étapes consistant à :
diriger la première partie de gaz résiduaires vers la chambre de réaction (120) de l'oxydeur thermique régénératif (100) de telle sorte que la première partie de gaz résiduaires entre dans l'oxydeur thermique régénératif en aval d'au moins une partie du premier lit (131, 132, 133) ;
diriger le gaz contenant de l'oxygène à travers le premier lit (131, 132, 133) vers la chambre de réaction (120) de l'oxydeur thermique régénératif (100) ; et
diriger la seconde partie de gaz résiduaire à travers le premier lit (131, 132, 133) de l'oxydeur thermique régénératif (100) ; et
dans lequel le procédé comprend, pendant un second cycle, les étapes consistant à :
diriger la première partie de gaz résiduaires vers la chambre de réaction (120) de l'oxydeur thermique régénératif (100) de telle sorte que la première partie de gaz résiduaires entre dans l'oxydeur thermique régénératif en aval d'au moins une partie d'un second lit (131, 132, 133) de l'oxydeur thermique régénératif (100) ;
diriger le gaz contenant de l'oxygène à travers le deuxième lit (131, 132, 133) vers la chambre de réaction (120) de l'oxydeur thermique régénératif (100) de telle sorte que le gaz contenant de l'oxygène soit préchauffé par le deuxième lit (131, 132, 133) ; et
diriger la seconde partie de gaz résiduaire à travers le deuxième lit (131, 132, 133) de l'oxydeur thermique régénératif (100) de telle sorte que la seconde partie de gaz résiduaire soit préchauffée par le deuxième lit (131, 132, 133).
